(19) Europäisches Patentamt / European Patent Office / Office européen des brevets

(11) **EP 4 181 453 B1**

(12) **EUROPEAN PATENT SPECIFICATION**

(45) Date of publication and mention
of the grant of the patent:
**25.03.2026 Bulletin 2026/13**

(21) Application number: **21850537.8**

(22) Date of filing: **30.07.2021**

(51) International Patent Classification (IPC):
*H04L 7/00* (2006.01)     *H04L 5/00* (2006.01)

(52) Cooperative Patent Classification (CPC):
H04L 5/0053; H04L 5/0051

(86) International application number:
**PCT/CN2021/109645**

(87) International publication number:
**WO 2022/022688 (03.02.2022 Gazette 2022/05)**

(54) **METHOD FOR TRANSMITTING SYNCHRONIZATION SIGNAL BLOCK, AND COMMUNICATION APPARATUS**

VERFAHREN ZUR ÜBERTRAGUNG EINES SYNCHRONISATIONSSIGNALBLOCKS UND KOMMUNIKATIONSVORRICHTUNG

PROCÉDÉ DE TRANSMISSION DE BLOC DE SIGNAL DE SYNCHRONISATION, ET APPAREIL DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2020 CN 202010770403**

(43) Date of publication of application:
**17.05.2023 Bulletin 2023/20**

(73) Proprietor: **Huawei Technologies Co., Ltd.**
**Shenzhen, Guangdong 518129 (CN)**

(72) Inventors:
• **ZHANG, Yunhao**
  **Shenzhen, Guangdong 518129 (CN)**
• **XU, Xiuqiang**
  **Shenzhen, Guangdong 518129 (CN)**
• **LUO, Zhe**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
EP-A1- 3 480 978      WO-A1-2020/103161
CN-A- 109 314 883     CN-A- 110 999 375
US-A1- 2018 220 360

• **QUALCOMM INCORPORATED: "Considerations for Standardization Framework and Design Principles of RedCap Devices", vol. RAN WG1, no. e-Meeting; 20200525 - 20200605, 16 May 2020 (2020-05-16), XP051886225, Retrieved from the Internet <URL:https://ftp.3gpp.org/tsg_ran/WG1_RL1/TSGR1_101-e/Docs/R1-2004496.zip R1-2004496 Considerations for Standardization Framework and Design Principles of RedCap Devices.docx> [retrieved on 20200516]**
• **VIVO ET AL: "Capability and complexity reduction for Reduced Capability NR devices", vol. RAN WG1, no. e-Meeting; 20200525 - 20200605, 16 May 2020 (2020-05-16), XP051885217, Retrieved from the Internet <URL:https://ftp.3gpp.org/tsg_ran/WG1_RL1/TSGR1_101-e/Docs/R1-2003431.zip R1-2003431.docx> [retrieved on 20200516]**

- NOKIA ET AL: "On DL Signals and Channels for NR-U", vol. RAN WG1, no. Gothenburg, Sweden; 20180820 - 20180824, 10 August 2018 (2018-08-10), pages 1 - 10, XP051516287, Retrieved from the Internet <URL:http://www.3gpp.org/ftp/tsg%5Fran/WG1%5FRL1/TSGR1%5F94/Docs/R1%2D1808917%2Ezip> [retrieved on 20180810]
- HUAWEI, HISILICON: "Maintenance on the initial access signals and channels", 3GPP DRAFT; R1-2003509, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. E-meeting; 20200525 - 20200605, 16 May 2020 (2020-05-16), Mobile Competence Centre ; 650, route des Lucioles ; F-06921 Sophia-Antipolis Cedex ; France , XP051885293

## EP 4 181 453 B1

### Description

### TECHNICAL FIELD

This application relates to the field of communication technologies, and in particular, to a synchronization signal block transmission method and a communication apparatus.

### BACKGROUND

To cope with explosive growth of mobile data traffic in the future, massive mobile communication device connections, and/or various emerging new services and application scenarios, a 5th generation (5th generation, 5G) mobile communication system emerges. For example, three types of application scenarios are defined in the 5G mobile communication system: an enhanced mobile broadband (enhanced mobile broadband, eMBB) scenario, an ultra-reliable low-latency communication (ultra-reliable low-latency communication, URLLC) scenario, and a massive machine-type communications (massive machine-type communications, mMTC) scenario.

For example, the eMBB scenario includes an ultra high-definition video, augmented reality (augmented reality, AR), and/or virtual reality (virtual reality, VR). These services are mainly characterized by a large amount of transmitted data and a high transmission rate. The URLLC scenario includes a tactile interaction-type application such as wireless control in an industrial manufacturing or production process, motion control of an unmanned vehicle or unmanned aircraft, remote repair of an unmanned vehicle or unmanned aircraft, and/or remote surgery. These services are mainly characterized by ultra-high reliability and a low latency of transmission. In addition, these services may further be characterized by a small amount of transmitted data and/or burstiness. The mMTC scenario includes power distribution automation of a smart grid, communication of a wearable device, and/or a smart city. These services are mainly characterized by a large quantity of networked devices and/or a small amount of transmitted data. In addition, a terminal device in the mMTC scenario may need to satisfy a requirement for low costs and/or long standby time.

US 2018/220360 A1 discloses an access node that comprises node processor circuitry and a node transmitter. The node processor circuitry is configured to generate plural types of synchronization signal blocks for at least partially interspersed transmission over a radio interface. Each synchronization signal block type comprises a unique combination of differing types of information. The node transmitter circuitry configured to at least partially intersperse transmission of the plural types of synchronization signal blocks over the radio interface to at least one wireless terminal. The wireless terminal comprises a terminal receiver and terminal processor circuitry. The terminal receiver is configured to receive, in at least partially interspersed manner, synchronization signal blocks of differing types over a radio interface from an access node. The terminal processor circuitry is configured determine to which of plural types of synchronization signal blocks a received synchronization signal block belongs.

EP 3 480 978 A1 discloses a method of receiving a synchronization signal block (SSB) by a user equipment in a wireless communication system. The method includes receiving a first SSB from a serving cell, receiving a second SSB from a neighbor cell, obtaining time information of the first SSB based on a physical broadcasting channel (PBCH) included in the first SSB, and obtaining an index of the second SSB using the time information of the first SSB.

With the introduction of RedCap UE, it is important to consider their efficient coexistence with high-end eMBB and URLLC devices. Qualcomm Incorporated: "Considerations for Standardization Framework and Design Principles of RedCap Devices", R1-2004496, presented at 3GPP TSG-RAN WG1 Meeting #101, proposes that the cell-defining SSB of RedCap devices can use the non-cell-defining SSB of legacy UE for initial access, and the legacy UE can use the cell-defining SSB of RedCap UE for RSRP measurements.

### SUMMARY

Embodiments of this application provide a synchronization signal block transmission method and a communication apparatus, to improve utilization of an SSB.

To resolve the foregoing technical problem, embodiments of this application provide the following technical solutions.

According to a first aspect, an embodiment of this application provides a synchronization signal block transmission method performed by a second terminal, including: receiving a first synchronization signal block SSB from a network device, where for terminal devices of different types, SSBs of different types are configured by the network device, where the first SSB is a first-type SSB for a first terminal device and the first SSB is a second-type SSB for the second terminal device, and where the first-type SSB is a non-cell defining SSB, non-CD-SSB and the second-type SSB is a cell defining SSB, CD-SSB; and if the first SSB is the first-type SSB for the first terminal device and the first SSB is the second-type SSB for the second terminal device, determining a first control-resource set and/or first common search space based on the first SSB.

3

For example, the first terminal device is a legacy (Legacy) terminal device, the first-type SSB is a non-CD-SSB, the second terminal device is a REDCAP terminal device, and the second-type SSB is a CD-SSB. In the foregoing solution, for the second terminal device and the first terminal device, the first SSB may be SSBs of different types. For example, the first SSB is the first-type SSB for the first terminal device, and the first SSB is the second-type SSB for the second terminal device. Therefore, different results are obtained when the second terminal device and the first terminal device identify a type of the first SSB, and the second terminal device and the first terminal device may use the first SSB in different manners. For example, the second terminal device may determine the first control-resource set and/or the first common search space based on the first SSB. Therefore, the second terminal device may use the first control-resource set and/or the first common search space that are/is determined based on the first SSB, to improve utilization of the SSB. In addition, if the first SSB sent by the network device may be used by the second terminal device to determine the first control-resource set and/or the first common search space, the network device does not need to send another SSB to indicate the second terminal device to determine the first control-resource set and/or the first common search space. Therefore, the network device can further save overheads of sending more SSBs.

In a possible implementation, the method further includes: if the first SSB is a first-type SSB for the second terminal device, receiving a second SSB from the network device, and determining a second control-resource set and/or second common search space based on the second SSB. In the foregoing solution, the second terminal device may receive the second SSB from the network device, and determine the second control-resource set and/or the second common search space based on the second SSB. After obtaining the second control-resource set and the second common search space, the second terminal device may determine a PDCCH candidate resource by using the second control-resource set and the second common search space, detect DCI on the PDCCH candidate resource, obtain system information based on the DCI, and access a network by using the system information.

In the first aspect, the first SSB includes first indication information. When the first indication information is a first value, the first indication information indicates that the first SSB is the second-type SSB for the second terminal device.

In a possible implementation, the first SSB includes first indication information. When the first indication information is a second value, the first indication information indicates that the first SSB is the first-type SSB for the second terminal device.

In the foregoing solution, the first indication information may be implemented in the SSB in a plurality of manners. For example, the first indication information may be a newly added field in the SSB, a reserved field in the SSB, or an original field in the SSB. The second terminal device may obtain the first indication information by interpreting information carried in the SSB, so that the network device indicates an SSB type of the SSB to the second terminal device.

In the first aspect, the first indication information is carried by at least one of a common subcarrier spacing field, a demodulation reference signal-type A-position field, an intra-frequency reselection field, a spare field, and a reserved field corresponding to a frequency range FR 1 in the first SSB. In the foregoing solution, the network device may use one or more fields in the SSB to carry the first indication information. For example, the network device may use at least one (or one or more) of the common subcarrier spacing field, the demodulation reference signal-type A-position field, the intra-frequency reselection field, the spare field, and the reserved field corresponding to the frequency range FR 1 in the SSB to carry the first indication information. For example, the network device may use one or more of the foregoing fields in the SSB to carry the first indication information. A specific field name and a specific quantity of fields for carrying the first indication information in the SSB are not limited. The second terminal device may obtain the first indication information by parsing at least one of the common subcarrier spacing field, the demodulation reference signal-type A-position field, the intra-frequency reselection field, the spare field, and the reserved field corresponding to the frequency range FR 1 in the SSB. According to this method, the first indication information can be carried without increasing signaling overheads.

In a possible implementation, the first SSB further includes second indication information. The second indication information indicates offset information of the second SSB. In the foregoing solution, the second terminal device obtains the offset information of the second SSB from the first SSB, so that the second terminal device can receive, based on the offset information, the second SSB sent by the network device. The second terminal device may determine a common PDCCH candidate resource by using the second SSB, detect DCI on the PDCCH candidate resource, obtain system information based on the DCI, and access a network by using the system information. According to this method, the second terminal device can quickly find the second SSB, so that power consumption of the second terminal device is reduced.

In a possible implementation, the offset information of the second SSB includes first offset information of a global synchronization channel number GSCN of the second SSB relative to a GSCN of the first SSB. The second indication information includes a first bit and a second bit. The second bit indicates the first offset information of the GSCN of the second SSB relative to the GSCN of the first SSB. The GSCN of the second SSB and the GSCN of the first SSB satisfy the following relationship:

$$N_{GSCN2}^{Reference} = N_{GSCN1}^{Reference} + N_{GSCN1}^{Offset} + a \times n \times N_{GSCN}^{Offset},$$

where

$N_{GSCN2}^{Reference}$ is the GSCN of the second SSB, $N_{GSCN1}^{Reference}$ represents the GSCN of the first SSB, $N_{GSCN1}^{Offset}$ represents the first offset, a is a value indicated by the first bit, a value of a is 1 or -1, n is an adjustment coefficient, and $N'^{Offset}_{GSCN}$ represents the first offset information of the GSCN of the second SSB relative to the GSCN of the first SSB.

In a possible implementation, the second indication information includes a first bit and a second bit.

The GSCN of the second SSB and the GSCN of the first SSB satisfy the following relationship:

$$N_{GSCN2}^{Reference} = N_{GSCN1}^{Reference} + N_{GSCN1}^{Offset} + a \times n \times N'^{Offset}_{GSCN},$$

where

$N_{GSCN2}^{Reference}$ is the GSCN of the second SSB, $N_{GSCN1}^{Reference}$ represents the GSCN of the first SSB, $N_{GSCN1}^{Offset}$ represents a first offset, a is a value indicated by the first bit, a value of a is 1 or -1, n is an adjustment coefficient, $N'^{Offset}_{GSCN}$ represents a value indicated by the second bit, and $N_{GSCN1}^{Offset}$ is a real number greater than or equal to 0.

In the foregoing solution, the second terminal device may obtain the first bit and the second bit from the second indication information included in the first SSB. Bit positions of the first bit and the second bit in the second indication information are not limited. The first bit indicates the value of a, and n may be the adjustment coefficient. For example, a value of n may be preset. For example, n is a coefficient predefined in a protocol. The second bit indicates the first offset information of the GSCN of the second SSB relative to the GSCN of the first SSB. Similar to the foregoing equation, the second terminal device may obtain the GSCN of the second SSB.

In a possible implementation, the first terminal device is a legacy (Legacy) terminal device, a first type is a non-CD-SSB, the second terminal device is a REDCAP terminal device, and a second type is a CD-SSB. The first SSB includes a B1 bit, and the B1 bit indicates whether the SSB is a non-CD-SSB for the REDCAP terminal device. For example, when B1=1, it indicates that the SSB is a non-CD-SSB for the REDCAP terminal device. When B1=0, it indicates that the SSB is a CD-SSB for the REDCAP terminal device. The first SSB further includes B2 bits, and B2 may represent the following two meanings: If B1=1, that is, when the SSB is a non-CD-SSB for the REDCAP terminal device, B2 indicates an offset (offset) value of a new SSB frequency relative to a legacy terminal device, and the offset is used by the REDCAP terminal device to jump to a CD-SSB for the REDCAP terminal device. If B1=0, that is, when the SSB is a CD-SSB for the REDCAP terminal device, B2 indicates a CORESET #0 and/or CSS, so that the REDCAP terminal device searches for downlink control information in an indicated time-frequency range, and after finding the downlink control information, obtains system information based on an indication of the downlink control information.

In a possible implementation, the B2 bits indicate frequency information of a CD-SSB for the REDCAP terminal device. For example, the B2 bits represent a GSCN offset, and B2 may be the first bit and the second bit in the second indication information.

In a possible implementation, the B2 bits may indicate the CORESET #0 and/or the CSS to the REDCAP terminal device by using any one of the following methods:

Method 1: The CORESET #0 is a value predefined in a protocol, and the B2 bits indicate the CSS.
Method 2: The CSS is a value predefined in a protocol, and the B2 bits indicate the CORESET #0.
Method 3: B2=B21+B22, a B21 bit in the B2 bits indicates the CORESET #0, a B22 bit indicates the CSS, and both B21 and B22 are integers greater than or equal to 0.

In a possible implementation, the offset information of the second SSB includes second offset information of a GSCN of the second SSB relative to a GSCN of the first SSB. The second indication information includes a first bit and a second bit. The second bit indicates the second offset information of the GSCN of the second SSB relative to the GSCN of the first SSB. The GSCN of the second SSB and the GSCN of the first SSB satisfy the following relationship:

$$N_{GSCN2}^{Reference} = N_{GSCN1}^{Reference} + a \times n \times N''^{Offset}_{GSCN},$$

where

$N_{GSCN2}^{Reference}$ is the GSCN of the second SSB, $N_{GSCN1}^{Reference}$ represents the GSCN of the first SSB, a is a value indicated by the first bit, a value of a is 1 or -1, n is an adjustment coefficient, and $N''^{Offset}_{GSCN}$ represents the second offset information of the GSCN of the second SSB relative to the GSCN of the first SSB.

In a possible implementation, the second indication information includes a first bit and a second bit.

The GSCN of the second SSB and the GSCN of the first SSB satisfy the following relationship:

$$N_{GSCN2}^{Reference} = N_{GSCN1}^{Reference} + a \times n \times N''^{Offset}_{GSCN},$$

where

$N_{GSCN2}^{Reference}$ is the GSCN of the second SSB, $N_{GSCN1}^{Reference}$ represents the GSCN of the first SSB, a is a value indicated by the first bit, a value of a is 1 or -1, n is an adjustment coefficient, $N''^{Offset}_{GSCN}$ represents a value indicated by the second bit, and n is a real number greater than or equal to 0.

In the foregoing solution, the second terminal device may obtain the first bit and the second bit from the second indication information included in the first SSB. Bit positions of the first bit and the second bit in the second indication information are not limited. The first bit indicates the value of a, and n may be the adjustment coefficient. For example, a value of n may be preset. For example, n is a coefficient predefined in a protocol. The second bit indicates an offset of the GSCN of the second SSB relative to the GSCN of the first SSB. Therefore, based on the foregoing equation, the second terminal device may obtain the GSCN of the second SSB.

In a possible implementation, the offset information of the second SSB includes a GSCN offset of the second SSB. The second indication information includes a first bit and a second bit. The first bit indicates that the GSCN offset of the second SSB is a positive offset or the GSCN offset of the second SSB is a negative offset. The second bit indicates the GSCN offset of the second SSB. A frequency range of the second SSB is $[N_{GSCN}^{Reference} - N_{GSCN}^{Start} - b \times n \times N'''^{Offset}_{GSCN}, N_{GSCN}^{Reference} + N_{GSCN}^{End} + b \times n \times N'''^{Offset}_{GSCN}]$ . $N_{GSCN}^{Reference}$ is a GSCN of the first SSB, $N_{GSCN}^{Start}$ is a GSCN start value, b is a value indicated by the first bit, a value of b is 1 or -1, n is an adjustment coefficient, $N_{GSCN}^{End}$ is a GSCN end value, and $N'''^{Offset}_{GSCN}$ represents the GSCN offset of the second SSB.

In a possible implementation, the offset information of the second SSB includes a GSCN offset of the second SSB. The second indication information includes a first bit and a second bit. A frequency range of the second SSB is

$$[N_{GSCN}^{Reference} - N_{GSCN}^{Start} - b \times n \times N'''^{Offset}_{GSCN}, N_{GSCN}^{Reference} + N_{GSCN}^{End} + b \times n \times N'''^{Offset}_{GSCN}].$$

$N_{GSCN}^{Reference}$ is a GSCN of the first SSB, $N_{GSCN}^{Start}$ is a GSCN start value, b is a value indicated by the first bit, a value of b is 1 or -1, n is an adjustment coefficient, $N_{GSCN}^{End}$ is a GSCN end value, and $N'''^{Offset}_{GSCN}$ is a value indicated by the second bit.

In the foregoing solution, $N_{GSCN}^{Start}$ is the GSCN start value, and $N_{GSCN}^{End}$ is the GSCN end value. The GSCN start value and the GSCN end value may be values indicated by a MIB. For example, a pdcch-ConfigSIB1 field in the MIB may indicate the GSCN start value and the GSCN end value. The GSCN start value may be indicated by four high-order bits in the pdcch-ConfigSIB 1 field, and the GSCN end value may be indicated by four low-order bits of the pdcch-ConfigSIB1 field. The second terminal device may obtain the first bit and the second bit from the second indication information included in the first SSB. Bit positions of the first bit and the second bit in the second indication information are not limited. The first bit indicates the value of b, and n may be the adjustment coefficient. For example, a value of n may be preset. For example, n is a coefficient predefined in a protocol. The second bit indicates the GSCN offset of the second SSB. The GSCN offset of the second SSB may be for determining the frequency range of the second SSB.

In a possible implementation, the second indication information is carried by at least one of the common subcarrier spacing field, the demodulation reference signal-type A-position field, the intra-frequency reselection field, the spare field, and the reserved field corresponding to the frequency range FR 1 in the first SSB. In the foregoing solution, the network device may use one or more fields in the SSB to carry the second indication information. For example, the network device may use at least one (or one or more) of the common subcarrier spacing field, the demodulation reference signal-type A-position field, the intra-frequency reselection field, the spare field, and the reserved field corresponding to the frequency range FR 1 in the SSB to carry the second indication information. For example, the network device may use one or more of the foregoing fields in the SSB to carry the second indication information. In this embodiment of this application, a specific field name and a specific quantity of fields for carrying the second indication information in the SSB are not limited. The second terminal device may obtain the second indication information by parsing at least one of the common subcarrier spacing field, the demodulation reference signal-type A-position field, the intra-frequency reselection field, the spare field, and the reserved field corresponding to the frequency range FR 1 in the SSB. According to this method, the second indication information can be carried without increasing signaling overheads.

In a possible implementation, the first SSB includes third indication information. The third indication information indicates the first control-resource set and/or the first common search space. In the foregoing solution, after obtaining the first control-resource set and the first common search space, the second terminal device may determine PDCCH search space by using the first control-resource set and the first common search space, detect DCI on the PDCCH candidate resource, obtain system information based on the DCI, and access a network by using the system information.

In a possible implementation, the third indication information is carried by at least one of the common subcarrier spacing field, the demodulation reference signal-type A-position field, the intra-frequency reselection field, the spare field, and the reserved field corresponding to the frequency range FR 1 in the first SSB. In the foregoing solution, the network device may use one or more fields in the SSB to carry the third indication information. For example, the network device may use at least one (or one or more) of the common subcarrier spacing field, the demodulation reference signal-type A-position field, the intra-frequency reselection field, the spare field, and the reserved field corresponding to the frequency range FR 1 in the SSB to carry the third indication information. For example, the network device may use one or more of the foregoing fields in the SSB to carry the third indication information. In this embodiment of this application, a specific field name and a specific quantity of fields for carrying the third indication information in the SSB are not limited. The second terminal device may obtain the third indication information by parsing at least one of the common subcarrier spacing field, the demodulation reference signal-type A-position field, the intra-frequency reselection field, the spare field, and the reserved field corresponding to the frequency range FR 1 in the SSB. According to this method, the third indication information can be carried without increasing signaling overheads.

According to a second aspect, an embodiment of this application further provides a synchronization signal block transmission method performed by a second terminal device, including: receiving a first synchronization signal block SSB from a network device, where for terminal devices of different types, SSBs of a same type are configured by the network device, where the first SSB is a first-type SSB for a first terminal device and the second terminal device, and where the first-type SSB is a non-cell defining SSB, non-CD-SSB; and if the first SSB is the first-type SSB for the second terminal device, receiving a second SSB from the network device, and determining a second control-resource set and/or second common search space based on the second SSB. The first SSB includes first indication information, and a second value of the first indication information indicates that the first SSB is the first-type SSB for the second terminal device. The first indication information is carried by at least one of a common subcarrier spacing field, a demodulation reference signal-type A-position field, an intra-frequency reselection field, a spare field, and a reserved field corresponding to a frequency range FR 1 in the first SSB.

In the foregoing solution, the network device may use one or more fields in the SSB to carry the first indication information. For example, the network device may use at least one (or one or more) of the common subcarrier spacing field, the demodulation reference signal-type A-position field, the intra-frequency reselection field, the spare field, and the reserved field corresponding to the frequency range FR 1 in the SSB to carry the first indication information. For example, the network device may use one or more of the foregoing fields in the SSB to carry the first indication information. A specific field name and a specific quantity of fields for carrying the first indication information in the SSB are not limited. The second terminal device may obtain the first indication information by parsing at least one of the common subcarrier spacing field, the demodulation reference signal-type A-position field, the intra-frequency reselection field, the spare field, and the reserved field corresponding to the frequency range FR 1 in the SSB. According to this method, the first indication information can be carried without increasing signaling overheads.

In a possible implementation, the first SSB further includes second indication information. The second indication information indicates offset information of the second SSB.

In a possible implementation, the offset information of the second SSB includes first offset information of a global synchronization channel number GSCN of the second SSB relative to a GSCN of the first SSB. The second indication information includes a first bit and a second bit. The GSCN of the second SSB and the GSCN of the first SSB satisfy the following relationship:

$$N_{GSCN2}^{Reference} = N_{GSCN1}^{Reference} + N_{GSCN1}^{Offset} + a \times n \times N'^{Offset}_{GSCN},$$

where

$N_{GSCN2}^{Reference}$ is the GSCN of the second SSB, $N_{GSCN1}^{Reference}$ represents the GSCN of the first SSB, $N_{GSCN1}^{Offset}$ represents a first offset, a is a value indicated by the first bit, a value of a is 1 or -1, n is an adjustment coefficient, and $N'^{Offset}_{GSCN}$ is a value indicated by the second bit.

In a possible implementation, the offset information of the second SSB includes second offset information of a GSCN of the second SSB relative to a GSCN of the first SSB. The second indication information includes a first bit and a second bit. The GSCN of the second SSB and the GSCN of the first SSB satisfy the following relationship:

$$N_{GSCN2}^{Reference} = N_{GSCN1}^{Reference} + a \times n \times N''^{Offset}_{GSCN},$$

where

$N_{GSCN2}^{Reference}$ is the GSCN of the second SSB, $N_{GSCN1}^{Reference}$ represents the GSCN of the first SSB, a is a value indicated by the first bit, a value of a is 1 or -1, n is an adjustment coefficient, and $N''^{Offset}_{GSCN}$ is a value indicated by the second bit.

In a possible implementation, the offset information of the second SSB includes a GSCN offset of the second SSB. The second indication information includes a first bit and a second bit.

A frequency range of the second SSB is

$$[N_{GSCN}^{Reference} - N_{GSCN}^{Start} - b \times n \times N'''^{Offset}_{GSCN}, N_{GSCN}^{Reference} + N_{GSCN}^{End} + b \times n \times N'''^{Offset}_{GSCN}] . \quad N_{GSCN}^{Reference}$$ is a GSCN of the first SSB, $N_{GSCN}^{Start}$ is a GSCN start value, b is a value indicated by the first bit, a value of b is 1 or -1, n is an adjustment coefficient, $N_{GSCN}^{End}$ is a GSCN end value, and $N'''^{Offset}_{GSCN}$ is a value indicated by the second bit.

In a possible implementation, the second indication information is carried by at least one of the common subcarrier spacing field, the demodulation reference signal-type A-position field, the intra-frequency reselection field, the spare field, and the reserved field corresponding to the frequency range FR 1 in the first SSB.

According to a third aspect, an embodiment of this application further provides a synchronization signal block transmission method performed by a network device, including: sending a first synchronization signal block SSB to a second terminal device, where for terminal devices of different types, SSBs of different types are configured by the network device. The first SSB is a first-type SSB for a first terminal device and and the first SSB is a second-type SSB for the second terminal device . The first-type SSB is a non-cell defining SSB, non-CD-SSB and the second-type SSB is a cell defining SSB, CD-SSB. If the first SSB is the first-type SSB for the first terminal device and the first SSB is the second-type SSB for the second terminal device, the first SSB indicates a first control-resource set and/or first common search space to the second terminal device. The first SSB comprises first indication information, and a first value of the first indication information indicates that the first SSB is the second-type SSB for the second terminal device. The first indication information is carried by at least one of a common subcarrier spacing field, a demodulation reference signal-type A-position field, an intra-frequency reselection field, a spare field, and a reserved field corresponding to a frequency range, FR, 1 in the first SSB.

In a possible implementation, if the first SSB is a first-type SSB for the second terminal device, the method further includes: sending a second SSB to the second terminal device. The second SSB indicates a second control-resource set and/or second common search space to the second terminal device.

For detailed descriptions of the first SSB and the second SSB, refer to the first aspect. Details are not described herein again.

According to a fourth aspect, an embodiment of this application provides an apparatus. The apparatus may be a second terminal device, an apparatus in the second terminal device, or an apparatus that can be collaboratively used with the second terminal device. In a configuration, the apparatus may include modules that are in a one-to-one correspondence with the methods/operations/steps/actions described in the first aspect or the second aspect. The modules may be hardware circuits or software, or may be implemented by a combination of the hardware circuits and the software. In a configuration, the apparatus may include a processing module and a transceiver module.

In a possible implementation,

the transceiver module is configured to receive a first synchronization signal block SSB from a network device, where the first SSB is a first-type SSB for a first terminal device; and
the processing module is configured to: if the first SSB is a second-type SSB for a second terminal device, determine a first control-resource set and/or first common search space based on the first SSB.

In a possible implementation,

the processing module is configured to receive a first synchronization signal block SSB from a network device by using the transceiver module, where the first SSB is a first-type SSB for a first terminal device; and
the processing module is configured to: if the first SSB is a first-type SSB for a second terminal device, receive a second SSB from the network device by using the transceiver module, and determine a second control-resource set and/or second common search space based on the second SSB.

The first SSB includes first indication information, and a second value of the first indication information indicates that the first SSB is the first-type SSB for the second terminal device.

The first indication information is carried by at least one of a common subcarrier spacing field, a demodulation reference signal-type A-position field, an intra-frequency reselection field, a spare field, and a reserved field corresponding to a frequency range FR 1 in the first SSB.

In the fifth aspect, for details about the method performed by the processing module, refer to the descriptions in the first aspect or the second aspect.

According to a fifth aspect, an embodiment of this application provides an apparatus. The apparatus may be a network device, an apparatus in the network device, or an apparatus that can be collaboratively used with the network device. In a configuration, the apparatus may include modules that are in a one-to-one correspondence with the methods/operations/steps/actions described in the third aspect or the fourth aspect. The modules may be hardware circuits or software, or may be implemented by a combination of the hardware circuits and the software. In a configuration, the apparatus may include a processing module and a transceiver module.

In a possible implementation,
the processing module is configured to send a first synchronization signal block SSB to a second terminal device by using the transceiver module, where the first SSB is a first-type SSB for a first terminal device.

If the first SSB is a second-type SSB for the second terminal device, the first SSB indicates a first control-resource set and/or first common search space to the second terminal device.

In a possible implementation,

the processing module is configured to send a first synchronization signal block SSB to a second terminal device by using the transceiver module, where the first SSB is a first-type SSB for a first terminal device; and
the processing module is configured to: if the first SSB is a first-type SSB for the second terminal device, sending a second SSB to the second terminal device by using the transceiver module.

The second SSB indicates a second control-resource set and/or second common search space to the second terminal device.

The first SSB includes first indication information, and a second value of the first indication information indicates that the first SSB is the first-type SSB for the second terminal device.

The first indication information is carried by at least one of a common subcarrier spacing field, a demodulation reference signal-type A-position field, an intra-frequency reselection field, a spare field, and a reserved field corresponding to a frequency range FR 1 in the first SSB.

In the sixth aspect, for details about the method performed by the processing module, refer to the descriptions in the third aspect or the fourth aspect.

According to a sixth aspect, an embodiment of this application further provides a computer-readable storage medium, including instructions. When the instructions are run on a computer, the computer is enabled to perform the method in any one of the first aspect to the third aspect.

According to a seventh aspect, an embodiment of this application further provides a computer program product, including instructions. When the instructions are run on a computer, the computer is enabled to perform the method in any one of the first aspect to the third aspect.

## BRIEF DESCRIPTION OF DRAWINGS

FIG. 1 is a schematic diagram of an interaction procedure of a communication method according to an embodiment of this application;
FIG. 2 is a schematic diagram of a frame structure of a first SSB according to an embodiment of this application;
FIG. 3 is a schematic diagram of an application scenario of a synchronization signal block transmission method performed by a REDCAP terminal device according to an embodiment of this application;
FIG. 4 is a schematic diagram of determining a CORESET #0 according to an embodiment of this application;
FIG. 5 is a schematic diagram of determining CSS according to an embodiment of this application;
FIG. 6 is a schematic diagram of a structure of a terminal device according to an embodiment of this application;
FIG. 7 is a schematic diagram of a structure of a network device according to an embodiment of this application;
FIG. 8 is a schematic diagram of a structure of an apparatus according to an embodiment of this application; and
FIG. 9 is a schematic diagram of a structure of an apparatus according to an embodiment of this application.

## DESCRIPTION OF EMBODIMENTS

Embodiments of this application provide a synchronization signal block transmission method and a communication apparatus, to improve utilization of an SSB.

The following describes embodiments of this application with reference to the accompanying drawings.

Technical solutions provided in embodiments of this application may be applied to various communication systems, for example, a long term evolution (long term evolution, LTE) system, a 5G mobile communication system, a wireless fidelity (wireless fidelity, Wi-Fi) system, a future 6th generation communication system, a system integrating a plurality of communication systems, or the like. This is not limited in embodiments of this application. 5G mobile communication may also be referred to as a new radio (new radio, NR) mobile communication system.

The technical solutions provided in embodiments of this application may be applied to various communication scenarios, for example, applied to one or more of the following communication scenarios: eMBB, URLLC, mMTC, device-to-device (device-to-device, D2D) communication, vehicle-to-everything (vehicle-to-everything, V2X) communication, vehicle-to-vehicle (vehicle-to-vehicle, V2V) communication, internet of things (internet of things, IoT), and the like.

A wireless communication system includes communication devices, and the communication devices may perform wireless communication over an air interface resource. The communication devices may include a network device and a terminal device, and the network device may also be referred to as a network-side device. The air interface resource may include at least one of a time domain resource, a frequency domain resource, a code resource, and a spatial resource. In embodiments of this application, "at least one (type)" may alternatively be described as "one (type) or more (types)", and "a plurality of (types)" may be two (types), three (types), four (types), or more (types). This is not limited in embodiments of this application. For example, the wireless communication system includes two communication devices: a first communication device and a second communication device. The first communication device may be a network device, and the second communication device may be a terminal device.

In embodiments of this application, "/" may represent an "or" relationship between associated objects. For example, A/B may represent A or B. However, in a calculation manner, "/" may represent a division symbol. For example, N/M represents N divided by M, and N and M each represent a value. The term "and/or" may be used to describe three relationships existing between associated objects. For example, A and/or B may represent the following three cases: Only A exists, both A and B exist, and only B exists, where A and B may be singular or plural. To facilitate description of the technical solutions in embodiments of this application, in embodiments of this application, words such as "first", "second", "A", and "B" may be used to distinguish between technical features with a same or similar function. The words such as "first", "second", "A", and "B" do not limit a quantity and an execution sequence, and the words such as "first", "second", "A", and "B" do not indicate a definite difference either. In embodiments of this application, terms such as "example" or "for example" are used to represent giving an example, an illustration, or a description. Any embodiment or configuration scheme described with "example" or "for example" should not be explained as being more preferred or having more advantages than another embodiment or configuration scheme. Use of the terms such as "example" or "for example" is intended to present a related concept in a specific manner for ease of understanding.

The terminal device in embodiments of this application may also be referred to as a terminal, and may be a device having a wireless transceiver function. The terminal device may be deployed on land, where the deployment includes indoor or outdoor, or handheld or vehicle-mounted deployment, may be deployed on water (for example, on a ship), or may be deployed in air (for example, on aircraft, a balloon, or a satellite). The terminal device may be user equipment (user equipment, UE). The UE includes a handheld device, a vehicle-mounted device, a wearable device, or a computing device having a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of the terminal device may be a terminal device, or may be an apparatus that can support the terminal device in implementing the function, for example, a chip system. The apparatus may be disposed in a terminal device, or the apparatus may be collaboratively used with the terminal device. In embodiments of this application, the chip system may include a chip, or may include a chip and another discrete component. In embodiments of this application, an example in which the apparatus configured to implement the function of the terminal device is a terminal device is used to specifically describe the technical solutions provided in embodiments of this application.

The network device in embodiments of this application includes a base station (base station, BS), and may be a device deployed in a radio access network for wireless communication with a terminal device. The base station may be in a plurality of forms, such as a macro base station, a micro base station, a relay station, or an access point. For example, the base station in embodiments of this application may be a base station in a 5G mobile communication system or a base station in LTE. The base station in the 5G mobile communication system may also be referred to as a transmission reception point (transmission reception point, TRP) or a gNB. In embodiments of this application, an apparatus configured to implement a function of the network device may be a network device, or may be an apparatus that can support the network device in implementing the function, for example, a chip system. The apparatus may be disposed in a network device, or the apparatus may be collaboratively used with the network device. In embodiments of this application, an example in which the apparatus configured to implement the function of the network device is a network device is used to specifically describe the technical solutions provided in embodiments of this application.

The technical solutions provided in embodiments of this application may be applied to wireless communication between communication devices. The wireless communication between communication devices may include wireless communication between the network device and the terminal device, wireless communication between network devices, and wireless communication between terminal devices. In embodiments of this application, the term "wireless communication" may alternatively be "communication" for short, and the term "communication" may alternatively be referred to as "data transmission", "information transmission", or "transmission". The technical solution may be used for wireless communication between a scheduling entity and a subordinate entity. The scheduling entity may allocate an air interface resource to the subordinate entity. A person skilled in the art may use the technical solutions provided in embodiments of this application to perform wireless communication between another scheduling entity and a subordinate entity, for example, wireless communication between a macro base station and a micro base station, and wireless communication between a terminal device A and a terminal device B. In embodiments of this application, communication between a network device and a terminal device is used as an example for description.

In a communication system, for example, an NR mobile communication system or another system, compared with a legacy terminal device, for example, an eMBB terminal device, a light (light) terminal device may be introduced. The light terminal device may also be referred to as a reduced capability (reduced capability, REDCAP) terminal device. The eMBB terminal device may be a terminal device that can transmit an eMBB service. The REDCAP terminal device may exist in an mMTC scenario, but is not limited to the mMTC scenario. The mMTC scenario may include but is not limited to include only the REDCAP terminal device. Compared with the REDCAP terminal device, the legacy terminal device may be a high-capability terminal device or a terminal device whose capability is not limited. In this embodiment of this application, the legacy terminal device may be replaced with a high-capability terminal device that is introduced in the future and that is relative to the REDCAP terminal device. For example, capability comparison between the high-capability terminal device and the REDCAP terminal device satisfies one or more of a first item to a ninth item below.

First item: A maximum bandwidth supported by the high-capability terminal device is greater than a maximum bandwidth supported by the REDCAP terminal device. For example, the maximum bandwidth supported by the high-capability terminal device may be 100 megahertz (MHz) or 200 MHz, and the maximum bandwidth supported by the REDCAP terminal device may be 20 MHz, 10 MHz, or 5 MHz.

Second item: A quantity of antennas of the high-capability terminal device is greater than a quantity of antennas of the REDCAP terminal device. The quantity of antennas may be an actual quantity of antennas of the terminal device, or a maximum quantity of antennas that can be used for sending and/or receiving. For example, the high-capability terminal device supports a maximum of four receive antennas and two transmit antennas, and the REDCAP terminal device supports a maximum of two receive antennas and one transmit antenna. Alternatively, even if the quantity of antennas of the high-capability terminal device is equal to the quantity of antennas of the REDCAP terminal device, the high-capability terminal and the REDCAP terminal device are different in a capability of antenna selective transmission. For example, both the high-capability terminal device and the REDCAP terminal device support two transmit antennas. However, the high-capability terminal device supports antenna selective transmission, but the REDCAP terminal device does not support antenna selective transmission. Using single-antenna port data transmission as an example, the high-capability terminal device may switch single-antenna port data transmission on two transmit antennas, and a space diversity gain may be obtained for the data transmission. However, single-antenna port data transmission of the REDCAP terminal device can only be simultaneously performed on two transmit antennas, which is equivalent to transmission performance of one transmit antenna.

Third item: A maximum transmit power supported by the high-capability terminal device is greater than a maximum transmit power supported by the REDCAP terminal device. For example, the maximum transmit power supported by the high-capability terminal device is 23 decibel-milliwatts (decibel-milliwatts, dBm) or 26 dBm, and the maximum transmit power supported by the REDCAP terminal device is a value from 4 dBm to 20 dBm.

Fourth item: The high-capability terminal device supports carrier aggregation (carrier aggregation, CA), and the REDCAP terminal device does not support carrier aggregation.

Fifth item: When both the high-capability terminal device and the REDCAP terminal device support carrier aggregation, a maximum quantity of carriers supported by the high-capability terminal device is greater than a maximum quantity of carriers supported by the REDCAP terminal device. For example, the high-capability terminal device supports aggregation of a maximum of 32 carriers or five carriers, and the REDCAP terminal device supports aggregation of a maximum of two carriers.

Sixth item: The high-capability terminal device and the REDCAP terminal device are introduced in different protocol versions. For example, in an NR protocol, the high-capability terminal device is a terminal device introduced in release (release, R) 15 of the protocol, and the REDCAP terminal device is a terminal device introduced in R17 of the protocol.

Seventh item: The high-capability terminal device and the REDCAP terminal device have different duplex capabilities. The high-capability terminal device has a stronger duplex capability. For example, the high-capability terminal device supports full-duplex frequency division duplex (frequency division duplex, FDD). To be specific, the high-capability terminal device supports simultaneous receiving and sending when supporting FDD. The REDCAP terminal device supports half-duplex FDD. To be specific, the REDCAP terminal device does not support simultaneous receiving and sending when supporting FDD.

Eighth item: A data processing capability of the high-capability terminal device is stronger than a data processing capability of the REDCAP terminal device. The high-capability terminal device may process more data within same time. Alternatively, processing time of the high-capability terminal device is shorter when the high-capability terminal device processes same data. For example, a time point at which a terminal device receives downlink data from a network device is denoted as T1. After the terminal device processes the downlink data, a time point at which the terminal device sends, to the network device, a feedback to the downlink data is denoted as T2. A delay (that is, a time difference) between T2 and T1 of the high-capability terminal device is less than a delay of T2 and T1 of the REDCAP terminal device. The feedback to the downlink data may be an acknowledgment (acknowledgment, ACK) feedback or a negative acknowledgment (negative acknowledgment, NACK) feedback.

Ninth item: A peak rate of data transmission of the high-capability terminal device is greater than a peak rate of data transmission of the REDCAP terminal device. The data transmission includes uplink data transmission (to be specific, a terminal device may send data to a network device) and/or downlink data transmission (to be specific, the terminal device may receive data from the network device).

In embodiments of this application, different capabilities of a terminal device may include terminal devices of a plurality of capability types. For example, a first-type terminal device and a second-type terminal device may represent two terminal devices of different types. For example, the first-type terminal device may be a terminal device for an industrial wireless sensor network (industrial wireless sensor network, IWSN), and the second-type terminal device may be a terminal device for video surveillance (video surveillance). For example, the first-type terminal device may be a REDCAP terminal device, and the second-type terminal device may be a high-capability terminal device. For example, the first-type terminal device may be a REDCAP terminal device A, and the second-type terminal device may be a REDCAP terminal device B. One or more of the following capabilities of the REDCAP terminal device A and the REDCAP terminal device B are different: a bandwidth capability, a quantity of antennas, a transmit power, a CA capability, a duplex capability, and a data processing capability. For another example, the first-type terminal device may be a terminal device for an industrial wireless sensor network, and the second-type terminal device may be a terminal device for video surveillance and/or an eMBB terminal device.

In embodiments of this application, a terminal device may establish a connection between the terminal device and a network device by using an initial access process, so that the terminal device can transmit data to the network device. In a possible implementation, the initial access process of the terminal device (for example, a legacy terminal device) includes: detecting a primary synchronization signal (primary synchronization signal, PSS) and a secondary synchronization signal (secondary synchronization signal, SSS) from the network device, to receive a synchronization signal block (synchronization signal block, SSB) from the network device, where the SSB includes the PSS, the SSS, and a physical broadcast channel (physical broadcast channel, PBCH); obtaining a master information block (master information block, MIB) from the PBCH; if it is determined, based on the MIB, that the SSB is a cell-defining synchronization signal block (cell-defining SSB, CD-SSB), determining common search space (common search space, CSS) and a control-resource set (control-resource set, CORESET) #0 based on an indication of the MIB, or if it is determined, based on the MIB, that the SSB is a non-cell-defining synchronization signal block (non-cell-defining SSB, Non-CD-SSB), searching for a CD-SSB based on an indication of the non-CD-SSB, and determining CSS and a CORESET #0 based on an indication of a MIB of the found CD-SSB; determining, based on the CORESET #0 and the CSS, a candidate resource for transmitting a physical downlink control channel (physical downlink control channel, PDCCH), where the PDCCH carries downlink control information (downlink control information, DCI); detecting the DCI in the candidate resource for the PDCCH; after detecting the DCI, receiving a physical downlink shared channel (physical downlink shared channel, PDSCH) based on scheduling information indicated by the DCI, where the PDSCH carries system information of a cell, in other words, obtaining the system information of the cell based on an indication of the DCI; and initiating a random access process to the network device based on the system information, to establish a connection between the terminal device and the network device.

In this embodiment of this application, in the foregoing initial access process, the entire process of determining, based on the MIB, that the SSB is the CD-SSB; determining the CSS and the CORESET #0; determining the candidate resource for the PDCCH based on the CORESET #0 and the CSS; detecting the DCI in the candidate resource for the PDCCH; and obtaining the system information based on the DCI is collectively referred to as "accessing a network through the SSB", "accessing a network by utilizing or using the SSB", "accessing a network based on the SSB", or the like. A process of "accessing a network through the SSB", "accessing a network by utilizing or using the SSB", or "accessing a network based on the SSB" is not described in subsequent content in detail again. In the foregoing process, when an SSB is a non-CD-SSB for a terminal device (for example, the legacy terminal device or the REDCAP terminal device), the terminal device cannot perform a random access process based on the SSB, or the terminal device cannot access a network by utilizing or using the SSB. The terminal device can perform the random access process only after performing searching again and finding a CD-SSB based on the SSB.

During SSB deployment, a network device may configure a plurality of SSBs on one carrier (carrier). For example, four SSBs are configured on a carrier with a bandwidth of 100 megahertz (MHz). One of the four SSBs is a CD-SSB and is located on a frequency band 1. The other three of the four SSBs are non-CD-SSBs and are located on a frequency band 2 to a frequency band 4. The frequency band 1 to the frequency band 4 may be located at different frequency positions of the 100-MHz carrier. The frequency band 1 to the frequency band 4 do not overlap with each other. The network device may configure a bandwidth part (bandwidth part, BWP) for a terminal device that enters a radio resource control (radio resource control, RRC) connected mode. If the BWP configured for the terminal device includes the frequency band 2 to the frequency band 4, the terminal device may measure the non-CD-SSBs on the frequency band 2 to the frequency band 4, determine a power control parameter based on a measurement result, determine whether to perform cell handover, and the like. When detecting a non-CD-SSB in an initial access process, a terminal device in a non-connected mode (for example, an idle state or a deactivated state) may jump, based on an indication of the non-CD-SSB, to the frequency band 1 or another frequency band on which the CD-SSB is configured, to search for the CD-SSB. Therefore, a main function of the current non-CD-SSB is to enable the terminal in the connected mode to measure a reference signal, or enable the terminal in the non-connected mode to jump to the CD-SSB.

It is assumed that there is a service requirement on a network side. A REDCAP terminal device needs to use a frequency band on which a legacy (Legacy) non-CD-SSB is located as an operating frequency band, and the frequency band is not used for the legacy terminal device or a high-capability terminal device. For example, the frequency band is an industrial dedicated network. If the conventional non-CD-SSB is also a non-CD-SSB for the REDCAP terminal device, the non-CD-SSB cannot indicate a CORESET #0 and/or CSS to the REDCAP terminal device. In other words, the non-CD-SSB cannot be used by the REDCAP terminal device to obtain system information and initially access a network. As a result, the network device needs to broadcast more SSBs for the REDCAP terminal device to initially access the network, and there is a problem of a waste of resources for broadcasting the SSBs.

To resolve the foregoing technical problem, an embodiment of this application provides a synchronization signal block transmission method, which is applicable to a communication scenario between a network device and terminal devices of a plurality of types. A REDCAP terminal device and a legacy terminal device need to access a network by using SSBs of different types, and need to receive system information respectively required by the REDCAP terminal device and the legacy terminal device based on the SSBs of different types.

In this embodiment of this application, an SSB that is a non-CD-SSB for a terminal device (for example, a legacy terminal device, an eMBB terminal device, or a URLLC terminal device) may be a CD-SSB for another terminal device (for example, a REDCAP terminal device). Therefore, the another terminal device may perform random access by using the SSB that cannot be used by the terminal device to access a network, so that utilization of the SSB can be improved. In addition, an SSB broadcast by the network device may be used by the another terminal device. Therefore, the network device may be prevented from broadcasting more SSBs, so that power consumption of the network device is reduced.

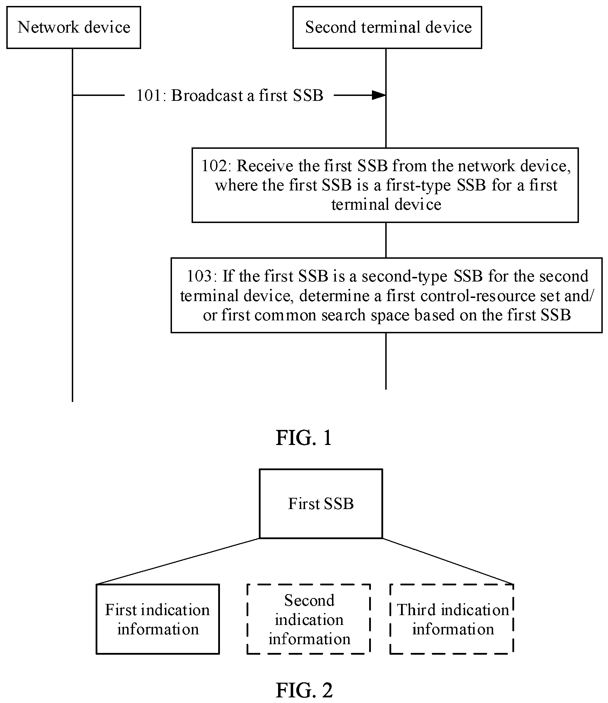

FIG. 1 is a schematic diagram of an interaction procedure between a network device and a terminal device according to an embodiment of this application. The interaction procedure shown in FIG. 1 mainly includes the following steps.

101: A network device sends a first SSB to a second terminal device, where the first SSB is a first-type SSB for a first terminal device.

The network device may manage one or more (for example, two, three, or six) cells, and the second terminal device may communicate with the network device in at least one of the cells (for example, a first cell). For example, the at least one cell is the first cell. The network device may broadcast the first SSB in the first cell, and the second terminal device may find the first SSB in the first cell. For example, the second terminal device obtains the SSB by detecting a PSS and an SSS on a frequency specified in a protocol or on a frequency on which the SSB may exist.

The second terminal device and the first terminal device may be terminal devices of two different types. For ease of description, this embodiment of this application is described by using the following case as an example: The second terminal device is a REDCAP terminal device, and the first terminal device is a high-capability terminal device. For example, the first terminal device may be an eMBB terminal device.

If the first SSB is a second-type SSB for the second terminal device, the first SSB indicates a first control-resource set and/or first common search space to the second terminal device.

In this embodiment of this application, the network device may configure the first SSB. For terminal devices of different types, the first SSB may be SSBs of different types, or may be SSBs of a same type. For example, the first SSB is the first-type SSB for the first terminal device, and the first SSB is the second-type SSB for the second terminal device. The first-type SSB and the second-type SSB may represent SSBs of different types. For example, the first-type SSB may be a non-CD-SSB. To be specific, the first-type SSB does not indicate a CORESET #0 and/or CSS. Therefore, the first terminal device cannot access a network by using a frequency corresponding to the first SSB, or the first terminal device cannot access a network by using the first SSB. The second-type SSB may be a CD-SSB. To be specific, the second-type SSB indicates a CORESET #0 and/or CSS. Therefore, the second terminal device may access a network by using the first SSB. For a process of accessing the network by using the SSB, refer to the foregoing descriptions. Details are not described herein again. For another example, the first-type SSB is an SSB that cannot be used by the terminal device to determine the CORESET #0 and/or the CSS, and the second-type SSB is an SSB that can be used by the terminal device to determine the CORESET #0 and/or the CSS. In this embodiment of this application, implementations of the first-type SSB and the second-type SSB are not limited. Specifically, the implementations of the first-type SSB and the second-type SSB may be flexibly configured based on an application scenario.

It should be noted that, in this embodiment of this application, a same SSB may be different SSB types for terminal devices of different types. The SSB types may include the first-type SSB and the second-type SSB. This embodiment of this application may further include SSBs of more types, for example, a third-type SSB and a fourth-type SSB. This is not limited.

102: The second terminal device receives the first SSB from the network device, where the first SSB is the first-type SSB for the first terminal device.

In this embodiment of this application, the second terminal device may receive the first SSB broadcast by the network device. The second terminal device may parse the first SSB, to obtain information carried in the first SSB. The second terminal device may determine an SSB type of the first SSB. For example, the second terminal device determines whether the first SSB is the first-type SSB for the first terminal device and whether the first SSB is the second-type SSB for the second terminal device. It can be learned from the foregoing descriptions of the first-type SSB and the second-type SSB that the first SSB may be SSBs of different types for terminal devices of different types. For example, the first SSB is the first-type SSB for the first terminal device, and the first SSB is the second-type SSB for the second terminal device.

When the second terminal device determines that the first SSB is the first-type SSB for the first terminal device and the first SSB is the second-type SSB for the second terminal device, the second terminal device performs subsequent step 103.

103: If the first SSB is the second-type SSB for the second terminal device, the second terminal device determines the first control-resource set and/or the first common search space based on the first SSB.

In this embodiment of this application, when the first SSB is the first-type SSB for the first terminal device, and the first SSB is the second-type SSB for the second terminal device, the second terminal device and the first terminal device may process the first SSB in different manners. For example, when the first SSB is a non-CD-SSB for the first terminal device, the first terminal device may jump to a new CD-SSB by using the first SSB, or perform measurement by using the SSB. When the first SSB is a non-CD-SSB for the first terminal device, and the first SSB is a CD-SSB for the second terminal device, the second terminal device may determine the first control-resource set and/or the first common search space based on the first SSB. For example, the first control-resource set may be the foregoing CORESET #0, and the first common search space may be the foregoing CSS. After determining the CORESET #0 and the CSS, the second terminal device may determine a PDCCH candidate resource based on the CORESET #0 and the CSS, detect DCI on the PDCCH candidate resource, obtain system information based on the DCI, and access a network by using the system information. Therefore, in this embodiment of this application, utilization of the SSB can be improved.

In this embodiment of this application, the first control-resource set and the first common search space may be for determining a candidate resource position of a common PDCCH. This is not limited. A PDSCH scheduled by using the common PDCCH may carry common information of a cell, or carry common information of a group of terminal devices. In the technical solution provided in this embodiment of this application, the first control-resource set and the first common search space may be replaced with a parameter with another name, and the parameter is for determining the candidate resource position of the common PDCCH.

In this embodiment of this application, when the first SSB is the second-type SSB for the second terminal device, the second terminal device may determine at least one of the following based on the first SSB: the first control-resource set and the first common search space. For example, the first SSB indicates information about the first control-resource set, the second terminal device may determine the first control-resource set by using the first SSB, and the second terminal device may determine the first common search space based on a preset specification in a protocol. For another example, the first SSB indicates information about the first common search space, the second terminal device may determine the first common search space by using the first SSB, and the second terminal device may determine the first control-resource set based on a preset specification in a protocol. For another example, the first SSB indicates information about the first control-resource set and information about the first common search space, and the second terminal device may determine the first control-resource set and the first common search space by using the first SSB. In this embodiment of this application, after obtaining the first control-resource set and the first common search space, the second terminal device may determine the PDCCH candidate resource by using the first control-resource set and the first common search space, detect the DCI on the PDCCH candidate resource, obtain the system information based on the DCI, and access the network by using the system information. In this embodiment of this application, the first terminal device cannot access the network by using the first SSB, but the second terminal device can access the network by using the first SSB. This improves utilization of the SSB that is used by the second terminal device and that is broadcast by the network device, and saves overheads of broadcasting more SSBs by the network device.

For example, the first-type SSB is a non-CD-SSB, and the second-type SSB is a CD-SSB. The second terminal device synchronizes with the network device by using the first SSB, and obtains a system information block (system information block, SIB) based on the first SSB. The second terminal device may initiate initial access to the network device based on information indicated by the SIB. For a detailed process of accessing the network by using the SSB, refer to the foregoing content descriptions. Details are not described herein again.

In some embodiments of this application, in addition to step 101, the synchronization signal block transmission method performed by the network device may further include the following step:

The network device sends a second SSB to the second terminal device.

The first SSB is a first-type SSB for the second terminal device, and the second SSB indicates a second control-resource set and/or second common search space to the second terminal device.

In some embodiments of this application, the network device may broadcast the first SSB and the second SSB. The first SSB is the first-type SSB for the second terminal device, and the second SSB is the second-type SSB for the second terminal device. The first SSB does not indicate the control-resource set and/or the common search space to the second terminal device, but the second SSB indicates the control-resource set and/or the common search space to the second terminal device. For example, the second SSB indicates the second control-resource set and/or the second common search space to the second terminal device, and the second terminal device may determine the second control-resource set and/or the second common search space by using the second SSB. The second terminal device may determine a PDCCH candidate resource by using the second control-resource set and the second common search space, detect DCI on the PDCCH candidate resource, obtain system information based on the DCI, and access a network by using the system information.

It should be noted that, in this embodiment of this application, the second control-resource set and the second common search space are for determining a candidate resource position of a common PDCCH. A PDSCH scheduled by using the common PDCCH may carry common information of a cell, or carry common information of a group of terminal devices. In the technical solution provided in this embodiment of this application, the second control-resource set and the second common search space may be replaced with a parameter with another name, and the parameter is for determining the candidate resource position of the common PDCCH.

In this embodiment of this application, the first control-resource set and the second control-resource set may be the same or may be different. This is not limited in this embodiment of this application. The first common search space and the second common search space may be the same or may be different. This is not limited in this embodiment of this application.

In some embodiments of this application, in addition to step 102 and step 103, the synchronization signal block transmission method performed by the second terminal device may further include the following step:

If the first SSB is the first-type SSB for the second terminal device, the second terminal device receives the second SSB from the network device, and determines the second control-resource set and/or the second common search space based on the second SSB.

The second terminal device determines whether the first SSB is the first-type SSB for the second terminal device. For terminal devices of different types, the first SSB may be SSBs of a same type. For example, the first SSB is the first-type SSB for the first terminal device, and the first SSB is the first-type SSB for the second terminal device. When the first SSB is the first-type SSB for the first terminal device, and the first SSB is the first-type SSB for the second terminal device, the second terminal device and the first terminal device may process the first SSB in a same manner. For example, if the first SSB is a non-CD-SSB for the first terminal device, and the first SSB is a non-CD-SSB for the second terminal device, the first terminal device cannot access a network by using the first SSB, and the first terminal device may jump to a CD-SSB (for example, the second SSB or a third SSB) for the first terminal device. The second terminal device cannot access a network by using the first SSB neither, and the second terminal device may jump to the second SSB. The second SSB and the third SSB may represent different SSBs. In this case, the second terminal device and the first terminal device may jump to a same SSB, or the second terminal device and the first terminal device may jump to different SSBs. The second terminal device may receive the second SSB from the network device, and determine the second control-resource set and/or the second common search space based on the second SSB. After obtaining the second control-resource set and the second common search space, the second terminal device may determine the PDCCH candidate resource by using the second control-resource set and the second common search space, detect the DCI on the PDCCH candidate resource, obtain the system information based on the DCI, and access the network by using the system information.

In some embodiments of this application, the SSB provided in this embodiment of this application includes first indication information.

When the first indication information is a first value, the first indication information indicates that the SSB is the second-type SSB for the second terminal device.

When the first indication information is a second value, the first indication information indicates that the SSB is the first-type SSB for the second terminal device. For example, the SSB is the first SSB or the second SSB. FIG. 2 is a schematic diagram of a structure of the first SSB. A structure of the second SSB may be similar to this structure, and is not described one by one.

Specifically, the first indication information may be implemented in the SSB in a plurality of manners. For example, the first indication information may be a newly added field in the SSB, a reserved field in the SSB, or an original field in the SSB. The second terminal device may obtain the first indication information by interpreting information carried in the SSB, so that the network device indicates an SSB type of the SSB to the second terminal device. The first SSB is used as an example. For example, when an original field in the first SSB is an invalid field for the second terminal device, the original field in the first SSB may carry the first indication information. In this way, in this embodiment of this application, the second terminal device can obtain the first indication information by re-interpreting the original field in the first SSB without changing the original structure of the first SSB, so that the network device indicates the SSB type of the first SSB to the second terminal device.

Specifically, there are a plurality of manners of setting a value of the first indication information, and the value of the first indication information may be the first value or the second value. For another example, the value of the first indication information may alternatively be a third value or a fourth value. Different values of the first indication information may indicate that the SSB carrying the first indication information is SSBs that are of different types and that are for the second terminal device. Specifically, the first SSB is used as an example. When the first indication information is the first value, the first indication information indicates that the first SSB is the second-type SSB for the second terminal device. For example, the first value may be 0. When the first indication information is the second value, the first indication information indicates that the first SSB is the first-type SSB for the second terminal device. For example, the second value may be 1. In this embodiment of this application, the network device may indicate different types of the SSB by configuring different values of the first indication information, and the second terminal device may determine the different types of the SSB by using the different values that are obtained from the first indication information through parsing, so that the second terminal device can perform a corresponding operation based on a specific SSB type that corresponds to the SSB and that is for the second terminal device.

Optionally, in some embodiments of this application, the first indication information is carried by at least one of a common subcarrier spacing (subCarrierSpacingCommon) field, a demodulation reference signal-type A-position (dmrs-TypeA-Position) field, an intra-frequency reselection (intraFreqReselection) field, a spare (spare) field, and a reserved field corresponding to a frequency range (frequency range, FR) 1 in the SSB carrying the first indication information.

For example, in this embodiment of this application, the common subcarrier spacing field indicates a subcarrier spacing of a CORESET #0. The demodulation reference signal-type A-position field indicates a position of a demodulation reference signal in a slot. The intra-frequency reselection field indicates whether to search for a cell on a new frequency when a cell is in a barred state. The spare field has no indication function. The reserved field corresponding to the FR 1 indicates that the field is in a reserved state when a spectrum is the FR 1, and has no indication function.

Specifically, the network device may use one or more fields in the SSB to carry the first indication information. For example, the network device may use at least one (or one or more) of the common subcarrier spacing field, the demodulation reference signal-type A-position field, the intra-frequency reselection field, the spare field, and the reserved field corresponding to the frequency range FR 1 in the SSB to carry the first indication information. For example, the network device may use one or more of the foregoing fields in the SSB to carry the first indication information. In this embodiment of this application, a specific field name and a specific quantity of fields for carrying the first indication information in the SSB are not limited. The second terminal device may obtain the first indication information by parsing at least one of the common subcarrier spacing field, the demodulation reference signal-type A-position field, the intra-frequency reselection field, the spare field, and the reserved field corresponding to the frequency range FR 1 in the SSB.

In this embodiment of this application, a frequency band on which the SSB is located may belong to different frequency ranges. For example, the frequency band on which the SSB is located may belong to the FR 1 or an FR 2. For example, a frequency range corresponding to the FR 1 is from 450 MHz to 6000 MHz, and a frequency range corresponding to the FR 2 is from 24250 MHz to 52600 MHz. The reserved field corresponding to the FR 1 is a field that is spare in the SSB when the frequency band on which the SSB is located belongs to the FR 1. Therefore, the reserved field may carry the first indication information. If the frequency band on which the SSB is located belongs to the FR 2, the spare field in the FR 1 indicates an SSB index.

In some embodiments of this application, when the first indication information is the first value, the first SSB includes third indication information. The third indication information indicates the first control-resource set and/or the first common search space.

When the first indication information is the first value, the second terminal device may determine at least one of the following by using the first SSB: the first control-resource set and the first common search space. For example, the first SSB includes the third indication information, and the third indication information indicates information about the first control-resource set. The second terminal device may determine the first control-resource set based on an indication of the third indication information, and the second terminal device may determine the first common search space based on a preset specification in a protocol. For another example, the third indication information indicates information about the first common search space. The second terminal device may determine the first common search space based on an indication of the third indication information, and the second terminal device may determine the first control-resource set based on a preset specification in a protocol. For another example, the third indication information indicates information about the first control-resource set and information about the first common search space. The second terminal device may determine the first control-resource set and the first common search space based on an indication of the third indication information. A position of the third indication information in the first SSB is not limited in this embodiment of this application. In this embodiment of this application, after obtaining the first control-resource set and the first common search space, the second terminal device may determine PDCCH search space by using the first control-resource set and the first common search space, detect DCI on the PDCCH candidate resource, obtain system information based on the DCI, and access a network by using the system information.

In some embodiments of this application, the third indication information is carried by at least one of the common subcarrier spacing field, the demodulation reference signal-type A-position field, the intra-frequency reselection field, the spare field, and the reserved field corresponding to the frequency range FR 1 in the first SSB.

Specifically, the network device may use one or more fields in the first SSB to carry the third indication information. The network device may use at least one of the common subcarrier spacing field, the demodulation reference signal-type A-position field, the intra-frequency reselection field, the spare field, and the reserved field corresponding to the frequency range FR 1 in the first SSB to carry the third indication information. This is not limited. For example, the network device may use one or more of the foregoing fields in the first SSB to carry the third indication information. In this embodiment of this application, a specific field name and a specific quantity of fields for carrying the third indication information in the first SSB are not limited. The second terminal device parses at least one of the common subcarrier spacing field, the demodulation reference signal-type A-position field, the intra-frequency reselection field, the spare field, and the reserved field corresponding to the frequency range FR 1 in the first SSB, to obtain the third indication information.

For example, the network device may use one or more of the foregoing fields in the first SSB to carry the first indication information and the third indication information. Positions of the first indication information and the third indication information in the first SSB are not limited. In addition, in this embodiment of this application, the specific field carrying the first indication information and the third indication information in the first SSB is not limited.

In some embodiments of this application, if the network device broadcasts the first SSB, the second terminal device may receive the first SSB. For example, when the first SSB carries the first indication information, and the first indication information includes the second value, the first indication information indicates that the first SSB is the first-type SSB for the second terminal device. For example, the first indication information indicates that the first SSB is a non-CD-SSB for the second terminal device. In this case, the network device further needs to broadcast the second SSB. The second SSB may be the second-type SSB for the second terminal device. For example, the second SSB may include the first indication information, and the value of the first indication information is the first value, indicating that the second SSB is the second-type SSB for the second terminal device, for example, a CD-SSB. In this implementation scenario, as shown in FIG. 2, the first SSB may further include second indication information. The second indication information indicates offset information of the second SSB. The offset information of the second SSB is offset information that needs to be used when the second terminal device determines the second SSB. For example, the offset information of the second SSB may be offset information of the second SSB relative to the first SSB. In the foregoing embodiment of this application, the second terminal device obtains the offset information of the second SSB from the first SSB, so that the second terminal device can receive, based on the offset information, the second SSB sent by the network device. The second terminal device may determine a common PDCCH candidate resource by using the second SSB, detect DCI on the PDCCH candidate resource, obtain system information based on the DCI, and access a network by using the system information.

In some embodiments of this application, a frequency position of the SSB may be represented by using a global synchronization channel number (global synchronization channel number, GSCN). For example, the frequency offset information of the second SSB includes first offset information of a GSCN of the second SSB relative to a GSCN of the first SSB.

In a possible implementation, the second indication information includes a first bit and a second bit.

The second bit indicates the first offset information of the GSCN of the second SSB relative to the GSCN of the first SSB.

The GSCN of the second SSB and the GSCN of the first SSB satisfy the following relationship:

$$N_{\mathrm{GSCN2}}^{\mathrm{Reference}} = N_{\mathrm{GSCN1}}^{\mathrm{Reference}} + N_{\mathrm{GSCN1}}^{\mathrm{Offset}} + a \times n \times N'^{\mathrm{Offset}}_{\mathrm{GSCN}}.$$

$N_{\mathrm{GSCN2}}^{\mathrm{Reference}}$ is the GSCN of the second SSB, $N_{\mathrm{GSCN1}}^{\mathrm{Reference}}$ represents the GSCN of the first SSB, $N_{\mathrm{GSCN1}}^{\mathrm{Offset}}$ represents a first offset, a is a value indicated by the first bit, a value of a is 1 or -1, n is an adjustment coefficient, and $N'^{\mathrm{Offset}}_{\mathrm{GSCN}}$ represents the first offset information of the GSCN of the second SSB relative to the GSCN of the first SSB. n is a real number greater than or equal to 0. For example, n may be an integer greater than or equal to 1. $N_{\mathrm{GSCN1}}^{\mathrm{Offset}}$ is a real number greater than or equal to 0. For example, $N_{GSCN1}^{Offset}$ may be an integer greater than or equal to 1.

In a possible implementation, the second indication information includes a first bit and a second bit.

The GSCN of the second SSB and the GSCN of the first SSB satisfy the following relationship:

$$N_{GSCN2}^{Reference} = N_{GSCN1}^{Reference} + N_{GSCN1}^{Offset} + a \times n \times N'^{Offset}_{GSCN}.$$

$N_{GSCN2}^{Reference}$ is the GSCN of the second SSB, $N_{GSCN1}^{Reference}$ represents the GSCN of the first SSB, $N_{GSCN1}^{Offset}$ represents a first offset, a is a value indicated by the first bit, a value of a is 1 or -1, n is an adjustment coefficient, $N'^{Offset}_{GSCN}$ represents a value indicated by the second bit. n is a real number greater than or equal to 0. For example, n may be an integer greater than or equal to 1. $N_{GSCN1}^{Offset}$ is a real number greater than or equal to 0. For example, $N_{GSCN1}^{Offset}$ may be an integer greater than or equal to 1.

Specifically, the second terminal device may obtain the first bit and the second bit from the second indication information included in the first SSB. Bit positions of the first bit and the second bit in the second indication information are not limited. The first bit indicates the value of a, and n may be the adjustment coefficient. For example, a value of n may be preset. For example, n is a coefficient predefined in a protocol. The second bit indicates the first offset information of the GSCN of the second SSB relative to the GSCN of the first SSB. Similar to the foregoing equation, the second terminal device may obtain the GSCN of the second SSB.

Based on the foregoing calculation manner that is satisfied by the GSCN of the second SSB and the GSCN of the first SSB, another similar calculation manner may alternatively be used. This is not limited. For example, another adjustment item is added to a right side of the $N_{GSCN2}^{Reference}$ equation, or the entire right side of the $N_{GSCN2}^{Reference}$ equation is multiplied by an adjustment item. This may be specifically flexibly configured with reference to an application scenario, and is not limited herein.

It should be noted that $N_{GSCN1}^{Offset}$ represents the first offset. The first offset is an offset obtained by searching a table based on $k_{SSB}$ and pdcch-ConfigSIB 1. For descriptions of $k_{SSB}$ and a specific manner of searching the table, refer to descriptions in subsequent embodiments.

Optionally, in this embodiment of this application, the second indication information may include a third indication field and a fourth indication field. The third indication field indicates that the first offset is a positive offset or a negative offset. The fourth indication field indicates the first offset information of the GSCN of the second SSB relative to the GSCN of the first SSB. The third indication field and the fourth indication field may be an explicit indication or an implicit indication. The third indication field and the fourth indication field may be indicated in a plurality of forms, for example, by using a bit or an information flow. For example, when the third indication field is a bit, the third indication field may be referred to as the first bit. When the fourth indication field is a bit, the fourth indication field may be referred to as the second bit.

In some embodiments of this application, a frequency position of the SSB may be represented by using a GSCN. For example, the offset information of the second SSB includes second offset information of a GSCN of the second SSB relative to a GSCN of the first SSB.

In a possible implementation, the second indication information includes a first bit and a second bit.

The second bit indicates the second offset information of the GSCN of the second SSB relative to the GSCN of the first SSB.

The GSCN of the second SSB and the GSCN of the first SSB satisfy the following relationship:

$$N_{GSCN2}^{Reference} = N_{GSCN1}^{Reference} + a \times n \times N''^{Offset}_{GSCN}.$$

$N_{GSCN2}^{Reference}$ is the GSCN of the second SSB, $N_{GSCN1}^{Reference}$ represents the GSCN of the first SSB, a is a value indicated by the first bit, a value of a is 1 or -1, n is an adjustment coefficient, and $N''^{Offset}_{GSCN}$ represents an offset of the GSCN of the second SSB relative to the GSCN of the first SSB. n is a real number greater than or equal to 0. For example, n may be an integer greater than or equal to 1.

In a possible implementation, the second indication information includes a first bit and a second bit.

The GSCN of the second SSB and the GSCN of the first SSB satisfy the following relationship:

$$N_{GSCN2}^{Reference} = N_{GSCN1}^{Reference} + a \times n \times N''^{Offset}_{GSCN}.$$

$N_{GSCN2}^{Reference}$ is the GSCN of the second SSB, $N_{GSCN1}^{Reference}$ represents the GSCN of the first SSB, a is a value indicated by the first bit, a value of a is 1 or -1, n is an adjustment coefficient, $N''^{\text{Offset}}_{\text{GSCN}}$ represents a value indicated by the second bit. n is a real number greater than or equal to 0. For example, n may be an integer greater than or equal to 1.

Specifically, the second terminal device may obtain the first bit and the second bit from the second indication information included in the first SSB. Bit positions of the first bit and the second bit in the second indication information are not limited. The first bit indicates the value of a, and n may be the adjustment coefficient. For example, a value of n may be preset. For example, n is a coefficient predefined in a protocol. The second bit indicates an offset of the GSCN of the second SSB relative to the GSCN of the first SSB. Therefore, based on the foregoing equation, the second terminal device may obtain the GSCN of the second SSB.

Based on the foregoing calculation manner that is satisfied by the GSCN of the second SSB and the GSCN of the first SSB, another similar calculation manner may alternatively be used. This is not limited. For example, another adjustment item is added to a right side of the $N^{\text{Reference}}_{\text{GSCN2}}$ equation, or the entire right side of the $N^{\text{Reference}}_{\text{GSCN2}}$ equation is multiplied by an adjustment item. This may be specifically flexibly configured with reference to an application scenario, and is not limited herein.

It should be noted that, in this embodiment of this application, the second indication information includes a third indication field and a fourth indication field. The third indication field indicates that the first offset is a positive offset or a negative offset. The fourth indication field indicates the offset of the GSCN of the second SSB relative to the GSCN of the first SSB. The third indication field and the fourth indication field may be an explicit indication or an implicit indication. The third indication field and the fourth indication field may be indicated in a plurality of forms, for example, by using a bit or an information flow. For example, when the third indication field is a bit, the third indication field may be referred to as the first bit. When the fourth indication field is a bit, the fourth indication field may be referred to as the second bit.

In some embodiments of this application, a frequency position of the SSB may be represented by using a GSCN. For example, the offset information of the second SSB includes a GSCN offset of the second SSB.

In a possible implementation, the second indication information includes a first bit and a second bit.

The first bit indicates that the GSCN offset of the second SSB is a positive offset or a negative offset.

The second bit indicates the GSCN offset of the second SSB.

A frequency range of the second SSB is:

$$[N^{\text{Reference}}_{\text{GSCN}} - N^{\text{Start}}_{\text{GSCN}} - b \times n \times N'''^{\text{Offset}}_{\text{GSCN}}, N^{\text{Reference}}_{\text{GSCN}} + N^{\text{End}}_{\text{GSCN}} + b \times n \times N'''^{\text{Offset}}_{\text{GSCN}}].$$

$N^{\text{Reference}}_{\text{GSCN}}$ is a GSCN of the first SSB, $N^{\text{Start}}_{\text{GSCN}}$ is a GSCN start value, b is a value indicated by the first bit, a value of b is 1 or -1, n is an adjustment coefficient, $N^{\text{End}}_{\text{GSCN}}$ is a GSCN end value, and $N'''^{\text{Offset}}_{\text{GSCN}}$ represents the GSCN offset of the second SSB. n is a real number greater than or equal to 0. For example, n may be an integer greater than or equal to 1.

Specifically, $N^{\text{Start}}_{\text{GSCN}}$ is the GSCN start value, and $N^{\text{End}}_{\text{GSCN}}$ is the GSCN end value. The GSCN start value and the GSCN end value may be values indicated by a MIB. For example, a pdcch-ConfigSIB1 field in the MIB may indicate the GSCN start value and the GSCN end value. The GSCN start value may be indicated by four high-order bits in the pdcch-ConfigSIB1 field, and the GSCN end value may be indicated by four low-order bits of the pdcch-ConfigSIB1 field. The second terminal device may obtain the first bit and the second bit from the second indication information included in the first SSB. Bit positions of the first bit and the second bit in the second indication information are not limited. The first bit indicates the value of b, and n may be the adjustment coefficient. For example, a value of n may be preset. For example, n is a coefficient predefined in a protocol. The second bit indicates the GSCN offset of the second SSB. The GSCN offset of the second SSB may be for determining the frequency range of the second SSB.

Based on the foregoing manner of determining the frequency range of the second SSB, another similar manner may alternatively be used. This is not limited. For example, another adjustment item is added based on a left boundary $N^{\text{Reference}}_{\text{GSCN}} - N^{\text{Start}}_{\text{GSCN}} - b \times n \times N'''^{\text{Offset}}_{\text{GSCN}}$ of the frequency range of the second SSB, or another adjustment item is added based on a right boundary $N^{\text{Reference}}_{\text{GSCN}} + N^{\text{End}}_{\text{GSCN}} + b \times n \times N'''^{\text{Offset}}_{\text{GSCN}}$ of the frequency range of the second SSB. This may be specifically flexibly configured with reference to an application scenario, and is not limited herein.

It should be noted that, in this embodiment of this application, the second indication information includes a third indication field and a fourth indication field. The third indication field indicates that the GSCN offset of the second SSB is a positive offset or a negative offset. The fourth indication field indicates the GSCN offset of the second SSB. The third indication field and the fourth indication field may be an explicit indication or an implicit indication. The third indication field and the fourth indication field may be indicated in a plurality of forms, for example, by using a bit or an information flow. For example, when the third indication field is a bit, the third indication field may be referred to as the first bit. When the fourth indication field is a bit, the fourth indication field may be referred to as the second bit.

Optionally, the second indication information is carried by at least one of the common subcarrier spacing field, the demodulation reference signal-type A-position field, the intra-frequency reselection field, the spare field, and the reserved field corresponding to the frequency range FR 1 in the SSB carrying the second indication information.

Specifically, the network device may use one or more fields in the SSB to carry the second indication information. For example, the network device may use at least one (or one or more) of the common subcarrier spacing field, the demodulation reference signal-type A-position field, the intra-frequency reselection field, the spare field, and the reserved field corresponding to the frequency range FR 1 in the SSB to carry the second indication information. For example, the network device may use one or more of the foregoing fields in the SSB to carry the second indication information. In this embodiment of this application, a specific field name and a specific quantity of fields for carrying the second indication information in the first SSB are not limited. The second terminal device may obtain the second indication information by parsing at least one of the common subcarrier spacing field, the demodulation reference signal-type A-position field, the intra-frequency reselection field, the spare field, and the reserved field corresponding to the frequency range FR 1 in the first SSB.

An embodiment of this application further provides a synchronization signal block transmission method, and the method mainly includes the following procedure.

A network device sends a first synchronization signal block SSB to a second terminal device, where the first SSB is a first-type SSB for a first terminal device.

If the first SSB is a first-type SSB for the second terminal device, the network device sends a second SSB to the second terminal device.

The second SSB indicates a second control-resource set and/or second common search space to the second terminal device.

The first SSB includes first indication information, and a second value of the first indication information indicates that the first SSB is the first-type SSB for the second terminal device.

The first indication information is carried by at least one of a common subcarrier spacing field, a demodulation reference signal-type A-position field, an intra-frequency reselection field, a spare field, and a reserved field corresponding to a frequency range FR 1 in the first SSB.

An embodiment of this application further provides a synchronization signal block transmission method, and the method mainly includes the following procedure.

A second terminal device receives a first synchronization signal block SSB from a network device, where the first SSB is a first-type SSB for a first terminal device.

If the first SSB is a first-type SSB for the second terminal device, the second terminal device receives a second SSB from the network device, and determines a second control-resource set and/or second common search space based on the second SSB.

The first SSB includes first indication information, and a second value of the first indication information indicates that the first SSB is the first-type SSB for the second terminal device.

The first indication information is carried by at least one of a common subcarrier spacing field, a demodulation reference signal-type A-position field, an intra-frequency reselection field, a spare field, and a reserved field corresponding to a frequency range FR 1 in the first SSB.

In the foregoing solution, the network device may use one or more fields in the SSB to carry the first indication information. For example, the network device may use at least one (or one or more) of the common subcarrier spacing field, the demodulation reference signal-type A-position field, the intra-frequency reselection field, the spare field, and the reserved field corresponding to the frequency range FR 1 in the SSB to carry the first indication information. For example, the network device may use one or more of the foregoing fields in the SSB to carry the first indication information. A specific field name and a specific quantity of fields for carrying the first indication information in the SSB are not limited. The second terminal device may obtain the first indication information by parsing at least one of the common subcarrier spacing field, the demodulation reference signal-type A-position field, the intra-frequency reselection field, the spare field, and the reserved field corresponding to the frequency range FR 1 in the SSB. According to this method, the first indication information can be carried without increasing signaling overheads.

For details, refer to the descriptions of the first indication information and the fields in the first SSB in the foregoing embodiment. Details are not described herein again.

For better understanding and implementation of the foregoing solutions in embodiments of this application, the following uses a corresponding application scenario as an example for specific description.

In embodiments, an example in which a network device is a base station, a second terminal device is a REDCAP terminal device (which is subsequently referred to as REDCAP UE for short), and a first terminal device is a legacy terminal device (Legacy terminal device) is used. A first-type SSB may be specifically a non-CD-SSB, and a second-type SSB may be specifically a CD-SSB. The legacy terminal device cannot obtain a SIB 1 by using a non-CD-SSB, and cannot access a network from a cell. In some scenarios, the REDCAP terminal device may access a network by using a non-CD-SSB corresponding to the legacy terminal device. For example, the network is a private network or an industrial network. In embodiments of this application, the REDCAP terminal device can determine a CORESET #0 and CSS by using the non-CD-SSB for the legacy terminal device, determine a PDCCH candidate resource based on the CORESET #0 and the CSS, detect DCI on the PDCCH candidate resource, obtain system information of the REDCAP terminal device based on the DCI, and access the network by using the system information.

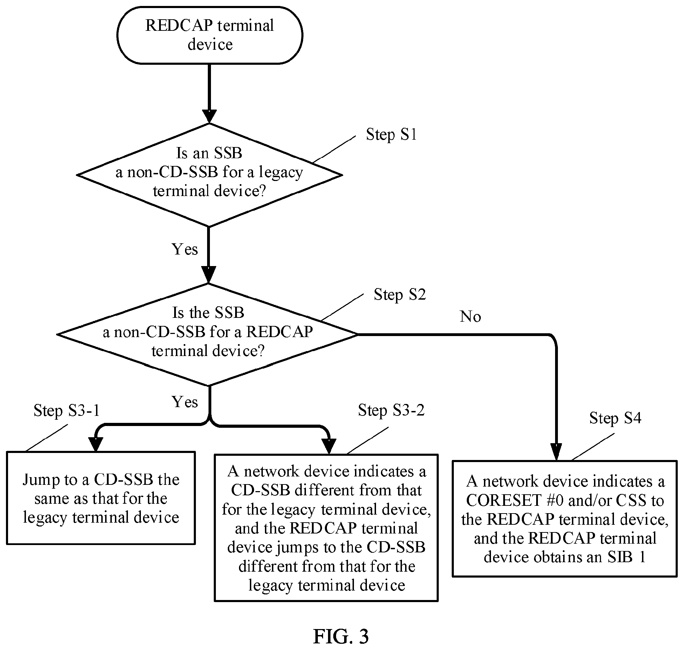

As shown in FIG. 3, an embodiment of this application provides a synchronization signal block transmission scenario. An SSB is a non-CD-SSB for a legacy terminal device. A REDCAP terminal device may determine an SSB type that is of the SSB and that is for the REDCAP terminal device, and perform different steps based on a determining result of the REDCAP terminal device. Specifically, when the REDCAP terminal device determines that an SSB is the non-CD-SSB for the legacy terminal device, a procedure performed by the REDCAP terminal device includes the following steps.

Step S1: The REDCAP terminal device determines whether a received SSB is the non-CD-SSB for the legacy terminal device. If the SSB is the non-CD-SSB for the legacy terminal device, the REDCAP terminal device performs step S2.

Optionally, the scenario may further include: The legacy terminal device determines whether the received SSB is the non-CD-SSB. If the legacy terminal device determines that the received SSB is the non-CD-SSB, the legacy terminal device jumps to a CD-SSB based on indication information on a PBCH.

Step S2: The REDCAP terminal device determines whether the received SSB is a non-CD-SSB for the REDCAP terminal device. If the REDCAP terminal device determines that the received SSB is the non-CD-SSB, the REDCAP terminal device jumps to step S3-1 or step S3-2. If the REDCAP terminal device determines that the received SSB is a CD-SSB, the REDCAP terminal device jumps to step S4.

Step S3-1: The REDCAP terminal device jumps to a CD-SSB the same as that for the legacy terminal device, and accesses a network by using the CD-SSB. For a specific process of accessing the network by using the SSB, refer to the foregoing content descriptions.

Step S3-2: A network device indicates a CD-SSB for the REDCAP terminal device, and the REDCAP terminal device jumps to the CD-SSB and accesses a network by using the CD-SSB. For a specific process of accessing the network by using the SSB, refer to the foregoing content descriptions.

Step S4: A network device indicates a CORESET #0 and/or CSS to the REDCAP terminal device, and the REDCAP terminal device obtains a SIB 1 based on the indication, to complete an initial access procedure.

The following describes a manner in which the terminal device determines whether the received SSB is the non-CD-SSB for the legacy terminal device in the foregoing step.

In embodiments of this application, a PBCH payload includes $\bar{a}_0, \bar{a}_1, \bar{a}_2, \bar{a}_3 ..., \bar{a}_{A-1}$. The A bits are used to carry information about a MIB. Meanings of fields included in the MIB and a quantity of bits in the fields are shown in Table 1.

**Table 1**

| Field | Meaning | Quantity of bits |
|---|---|---|
| systemFrameNumber | Six high-order bits of a system frame number | 6 |
| subCarrierSpacingCommon | Common subcarrier spacing | 1 |
| ssb-SubcarrierOffset | Frequency offset between an SSB and a resource block, represented by a quantity of subcarriers and used for calculating $k_{SSB}$ | 4 |
| dmrs-TypeA-Position | Demodulation reference signal-type A-position, indicating a position of a DMRS in a slot, and being either of the 2nd symbol and the 3rd symbol | 1 |
| pdcch-ConfigSIB 1 | Search space configuration information of DCI for scheduling system information | 8 |
| cellBarred | Indicating whether a cell rejects access of all terminals | 1 |
| intraFreqReselection | If a cell is in a barred state (cellBarred), an intra-frequency reselection field indicates whether to search for a cell on a new frequency. | 1 |
| spare | Spare | 1 |

In this embodiment of this application, after receiving the MIB, the terminal device determines, based on $k_{SSB}$, whether a CSS of the legacy terminal device exists. $k_{SSB}$ is calculated by using the ssb-SubcarrierOffset field. A frequency band on which the SSB is located may belong to an FR 1 or an FR 2. For the FR 1 and the FR 2, the following different calculation formulas may be used for $k_{SSB}$.

When the frequency band on which the SSB is located belongs to the FR 1, $k_{SSB} = \bar{a}_{\bar{A}+5}$ |ssb-SubcarrierOffset, includes five bits (bits) in total, and ranges from 0 to 31. $\bar{a}_{\bar{A}+5}$ is obtained by using the PBCH payload. "|" means a bit connection. To be specific, $k_{SSB}$ includes five bits, a most significant bit is $a_{\overline{A}+5}$, and the last four bits are ssb-SubcarrierOffset.

When the frequency band on which the SSB is located belongs to the FR 2, $k_{SSB}$ =ssb-SubcarrierOffset, includes four bits in total, and ranges from 0 to 15.

In this embodiment of this application, Table 2, Table 3a, and Table 3b show a method in which the terminal device determines, based on $k_{SSB}$, whether the SSB is a CD-SSB, and obtains a frequency position of a CD-SSB based on a pdcch-ConfigSIB1 field in a MIB after determining that the SSB is a non-CD-SSB. Table 3a is for calculating $N_{GSCN}^{Offset}$ when the frequency band on which the SSB is located may belong to the FR 1, and Table 3b is for obtaining $N_{GSCN}^{Offset}$ when the frequency band on which the SSB is located may belong to the FR 2.

**Table 2**

| $k_{SSB}$ range | Whether a SIB 1 exists | Subsequent information |
|---|---|---|
| FR 1 $k_{SSB} \leq 23$ <br> FR 2 $k_{SSB} \leq 11$ | Yes | If the SSB is a CD-SSB, continue to decode the SIB 1 |
| FR 1 $24 \leq k_{SSB} \leq 29$ <br><br> FR 2 $12 \leq k_{SSB} \leq 13$ | No | An SSB that is jumped to is a CD-SSB, and a jump is required. <br> A GSCN after the jump=$N_{GSCN}^{Reference} + N_{GSCN}^{Offset}$ . <br> $N_{GSCN}^{Reference}$ represents the GSCN of the SSB. $N_{GSCN}^{Offset}$ : Search a table based on $k_{SSB}$ and pdcch-ConfigSIB1, where Table *GSCN* 3a is searched for the FR 1, and Table 3b is searched for the FR 2. |
| FR 1 $k_{SSB} = 30$ <br> FR 2 $k_{SSB} = 14$ | No | Reserved |
| FR 1 $k_{SSB} = 31$ <br> FR 2 $k_{SSB} = 15$ <br> $N_{GSCN}^{Start}$ | No | All SSBs in the following frequency range are non-CD-SSBs: <br> $[N_{GSCN}^{Reference} - N_{GSCN}^{Start}, N_{GSCN}^{Reference} + N_{GSCN}^{End}]$ . <br> indicates four high-order bits in pdcch-ConfigSIB 1. <br> $N_{GSCN}^{End}$ indicates four low-order bits in pdcch-ConfigSIB 1. |

**Table 3a**

| $k_{SSB}$ | 16 ×controlResourceSetZero+searchSpaceZero | $N_{GSCN}^{Offset}$ |
|---|---|---|
| 24 | 0, 1, ..., 255 | 1, 2, ..., 256 |
| 25 | 0, 1, ..., 255 | 257, 258, ..., 512 |
| 26 | 0, 1, ..., 255 | 513, 514, ..., 768 |
| 27 | 0, 1, ..., 255 | -1, -2, ..., -256 |
| 28 | 0, 1, ..., 255 | -257, -258, ..., -512 |
| 29 | 0, 1, ..., 255 | -513, -514, ..., -768 |
| 30 | 0, 1, ..., 255 | Reserved, Reserved, ..., Reserved |

**Table 3b**

| $k_{SSB}$ | 16 ×controlResourceSetZero+searchSpaceZero | $N_{GSCN}^{Offset}$ |
|---|---|---|
| 12 | 0, 1, ..., 255 | 1, 2, ..., 256 |
| 13 | 0, 1, ..., 255 | -1, -2, ..., -256 |
| 14 | 0, 1, ..., 255 | Reserved, Reserved, ..., Reserved |

controlResourceSetZero represents a CORESET #0, and searchSpaceZero represents search space 0. In this embodiment of this application, searchSpaceZero may alternatively represent common search space CSS.

It should be noted that, in Table 1, if the terminal device receives the non-CD-SSB, for the terminal device, the common subcarrier spacing (subCarrierSpacingCommon) field, the demodulation reference signal-type A-position (dmrs-TypeA-Position) field, the intra-frequency reselection (intraFreqReselection) field, the spare (spare) field, and the reserved field corresponding to the frequency range (frequency range, FR) 1 do not need to be interpreted, or are interpreted but not correspondingly processed subsequently. In this embodiment of this application, subCarrierSpacing-Common, dmrs-TypeA-Position, intraFreqReselection, and spare may be used to carry at least one of the following indication information in the foregoing embodiments: the first indication information, the second indication information, and the third indication information.

The PBCH payload includes A bits, which are respectively $\overline{a}_0, \overline{a}_1, \overline{a}_2, \overline{a}_3, ..., \overline{a}_{A-1}$. The A bits are used to carry the MIB. In addition to $\overline{a}_0, \overline{a}_1, \overline{a}_2, \overline{a}_3, ..., \overline{a}_{A-1}$, eight bits, namely, $\overline{a}_A, \overline{a}_{A+1}, \overline{a}_{A+2}, \overline{a}_{A+3}, ..., \overline{a}_{A+7}$, are further used on the PBCH to indicate the following information:

$\overline{a}_A, \overline{a}_{A+1}, \overline{a}_{A+2}, \overline{a}_{A+3}$ are four low-order bits in the system frame number, a system frame number (systemFrameNumber) field in the MIB occupies six bits, and the 10 bits indicate the system frame number.

$\overline{a}_{A+4}$ is used as a half-frame to indicate $\overline{a}_{HRF}$, indicating whether the SSB is located in the first half-frame or the second half-frame in a frame.

Three bits, namely, $\overline{a}_{A+5}, \overline{a}_{A+6}, \overline{a}_{A+7}$, are used based on different frequency bands on which the SSB is located and different subcarrier spacings, and according to the following rule:

On a licensed spectrum of the FR 1 frequency band, when the subcarrier spacing of the SSB is 15 kHz, a maximum quantity of SSBs in an SSB burst is four. When the subcarrier spacing of the SSB is 30 kHz, the maximum quantity of SSBs in the SSB burst is eight. $\overline{a}_{A+5}$ is a most significant bit in $k_{SSB}$, and $\overline{a}_{A+6}, \overline{a}_{A+7}$ are reserved. On a licensed spectrum of the FR 2 frequency band, a maximum quantity of SSBs in the SSB burst is 64, and $\overline{a}_{A+5}, \overline{a}_{A+6}, \overline{a}_{A+7}$ are three highest bits that indicate SSB index information.

Based on the foregoing content, in $\overline{a}_A, \overline{a}_{A+1}, \overline{a}_{A+2}, \overline{a}_{A+3}, ..., \overline{a}_{A+7}$, there is a reserved field of zero to two bits based on the different frequency bands on which the SSB is located. For example, when the frequency band on which the SSB is located is the FR 1 frequency band, there is a reserved field, including $\overline{a}_{A+6}, \overline{a}_{A+7}$. In this embodiment of this application, at least one of the common subcarrier spacing (subCarrierSpacingCommon) field, the demodulation reference signal-type A-position (dmrs-TypeA-Position) field, the intra-frequency reselection (intraFreqReselection) field, the spare (spare) field, and the reserved field corresponding to the frequency range (frequency range, FR) 1 may be used to carry at least one of the first indication information, the second indication information, and the third indication information.

Specifically, the SSB includes the PBCH. The REDCAP terminal device obtains the MIB from the PBCH, and determines, based on an indication of the MIB, whether the SSB is the non-CD-SSB for the legacy terminal device. The indication may be implemented by using a spare bit on the PBCH or in the MIB and/or by re-interpreting a part of fields on the PBCH or in the MIB.

To ensure that the legacy terminal device maintains a function and behavior defined in a current protocol unchanged, content in the part of the fields on the PBCH or in the MIB is not changed. The following Table 4 shows information indicated by the MIB to the legacy terminal device and the REDCAP terminal device. In the non-CD-SSB for the legacy terminal device, the common subcarrier spacing (subCarrierSpacingCommon) field, the demodulation reference signal-type A-position (dmrs-TypeA-Position) field, the intra-frequency reselection (intraFreqReselection) field, the spare (spare) field, and the reserved field corresponding to the frequency range (frequency range, FR) 1 in the MIB may be used for the indication information sent by the network device to the REDCAP terminal device in the foregoing step.

**Table 4**

| PBCH payload (including the MIB) | Quantity of bits | Indication function in the non-CD-SSB for the legacy terminal device | Information indicated to the REDCAP terminal device |
| --- | --- | --- | --- |
| systemFrameNumber | 6 | System frame number | System frame number |
| subCarrierSpacingCommon | 1 | No indication meaning | This field may carry at least one of the first indication information, the second indication information, and the third indication in-formation. |

(continued)

| PBCH payload (including the MIB) | Quantity of bits | Indication function in the non-CD-SSB for the legacy terminal device | Information indicated to the REDCAP terminal device |
|---|---|---|---|
| ssb-SubcarrierOffset | 4 | Indicating whether the SSB is the non-CD-SSB, and indicating a frequency position of a CD-SSB | Indicating whether the SSB is the non-CD-SSB for the legacy terminal device, and indicating a frequency corresponding to a CD-SSB for the legacy terminal device |
| dmrs-TypeA-Position | 1 | No indication meaning | This field may carry at least one of the first indication information, the second indication information, and the third indication information. |
| pdcch-ConfigSIB 1 | 8 | Indicating a frequency position of a CD-SSB for the legacy terminal device | If the SSB is also a non-CD-SSB for the REDCAP terminal device, this field indicates a frequency corresponding to a CD-SSB for the REDCAP terminal device. |
| | | | Otherwise, because the field is directly related to behavior of the legacy terminal device, the field cannot be re-interpreted by the REDCAP terminal device. |
| cellBarred | 1 | Indicating whether access to a network is barred (Bar) | Indicating whether access to the network is barred |
| intraFreqReselection | 1 | If the access is not barred, there is no indication meaning. | If the access is not barred, this field may carry at least one of the first indication information, the second indication information, and the third indication information. |
| spare | 1 | Spare | This field may carry at least one of the first indication information, the second indication information, and the third indication information. |
| $a_{\overline{A}+6}, a_{\overline{A}+7}$ (which may be used as the reserved field corresponding to the FR 1, as described above) | 2 | The FR 1 is spare, and the FR 2 indicates an SSB index (Index). | The field corresponding to the FR 1 may carry at least one of the first indication information, the second indication information, and the third indication information. |

It should be noted that "spare" in Table 4 means that the field is spare in a protocol, and "no indication meaning" means that the field has no indication meaning in some scenarios. For example, when the MIB indicates that the SSB is the non-CD-SSB, subCarrierSpacingCommon in the MIB is meaningless because the field indicates a subcarrier spacing of a channel on which a SIB of the legacy terminal device is located, and the SSB has no corresponding SIB.

For descriptions of the first indication information, the second indication information, and the third indication information, refer to the foregoing embodiments. Details are not described herein again.

As shown in Table 4, if the frequency band on which the SSB is located belongs to the FR 1, the common subcarrier spacing (subCarrierSpacingCommon) field, the demodulation reference signal-type A-position (dmrs-TypeA-Position) field, the intra-frequency reselection (intraFreqReselection) field, the spare (spare) field, and the reserved field corresponding to the frequency range (frequency range, FR) 1 in Table 4 occupy six bits in total. If the frequency band on which the SSB is located belongs to the FR 2, the common subcarrier spacing (subCarrierSpacingCommon) field, the demodulation reference signal-type A-position (dmrs-TypeA-Position) field, the intra-frequency reselection (intraFreqReselection) field, the spare (spare) field, and the reserved field corresponding to the frequency range (frequency range, FR) 1 in Table 4 occupy four bits in total. These bits may be used according to the following rule.

In the foregoing six bits or four bits, one bit is denoted as B1, and B1 indicates whether the SSB is a non-CD-SSB for the REDCAP terminal device (used for determining in step S2). For example, when B1=1, it indicates that the SSB is a non-CD-SSB for the REDCAP terminal device. When B1=0, it indicates that the SSB is a CD-SSB for the REDCAP terminal device.

In addition to B1, five bits remain in the six bits, and three bits remain in the four bits in addition to B1. In this case, the five bits or the three bits are denoted as B2. and B2 may represent the following two meanings.

If B1=1, that is, when the SSB is the non-CD-SSB for the REDCAP terminal device, B2 indicates an offset (offset) value of a new SSB frequency relative to the legacy terminal device. The offset is used by the REDCAP terminal to jump to a CD-SSB for the REDCAP terminal.

If B 1=0, that is, when the SSB is a CD-SSB for the REDCAP terminal device, B2 indicates a CORESET #0 and/or CSS, so that the REDCAP terminal device searches, in an indicated time-frequency range, for DCI that is scrambled by using a system information-radio network temporary identifier (system information-radio network temporary indicator, SI-RNTI), and obtains a SIB 1 and the like based on an indication of the DCI after the DCI is found.

In this embodiment of this application, the B2 bits indicate frequency information of the CD-SSB for the REDCAP terminal device. For example, the B2 bits represent a GSCN offset, and B2 may be the first bit and the second bit.

In this embodiment of this application, the B2 bits may indicate the CORESET #0 and/or the CSS to the REDCAP terminal device by using any one of the following methods:

Method 1: The CORESET #0 is a value predefined in a protocol, and the B2 bits indicate the CSS.
Method 2: The CSS is a value predefined in a protocol, and the B2 bits indicate the CORESET #0.
Method 3: B2=B21+B22, a B21 bit in the B2 bits indicates the CORESET #0, a B22 bit indicates the CSS, and both B21 and B22 are integers greater than or equal to 0.

In the foregoing three methods, the CORESET #0 and/or the CSS may be indicated by using a method of searching a table. Method 1 and Method 2 may be used as special examples of Method 3. For unified description, X bits are for representing a quantity of bits indicating the CORESET #0, and Y bits are for representing a quantity of bits indicating the CSS below. In this case, X+Y=B2, and both X and Y are integers greater than or equal to 0.

The following describes how to determine the CORESET #0 and the CSS by using the method of searching a table. For example, Table 5 is for determining the CORESET #0, and Table 6 is for determining the CSS.

**Table 5**

| Index (index) | Synchronization signal (synchronization signal, SS) or PBCH block, and CORESET multiplexing pattern (multiplexing pattern) | Quantity of resource blocks (which is represented by $N_{RB}^{CORESET}$) | Quantity of symbols (which is represented by $N_{symb}^{CORESET}$) | Offset (Offset) of the resource block |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

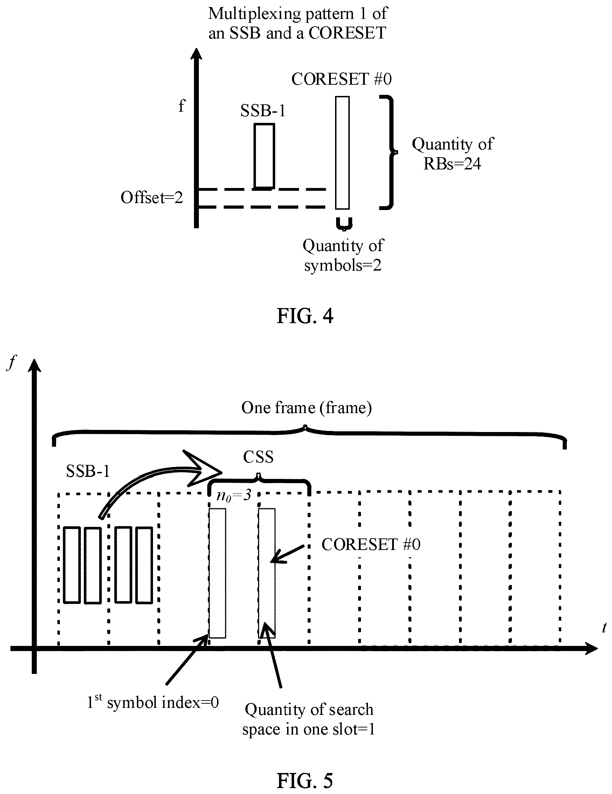

In this embodiment of this application, a table shown in Table 5 may be defined, and X bits indicate a row in the first $2^X$ rows. For example, two bits indicate one row in the first four rows, to indicate a time-frequency multiplexing manner of the SSB and the CORESET #0, a quantity $N_{\text{RB}}^{\text{CORESET}}$ (Number of RBs) of resource blocks occupied by the CORESET #0, a quantity $N_{\text{symb}}^{\text{CORESET}}$ (Number of Symbols) of symbols occupied by the CORESET #0, and a frequency domain offset (Offset) between the SSB and the CORESET #0. For example, the frequency domain offset between the SSB and the CORESET #0 is a resource block (resource block, RB) offset between lowest frequencies of the SSB and the CORESET #0. Therefore, a frequency resource position of the CORESET #0 is determined. For example, if the network device indicates the second row (index=1) in Table 5, the multiplexing pattern of the SSB and the CORESET #0 is the pattern 1 shown in the second column in Table 5, the quantity of RBs occupied by the CORESET #0 is 24, the quantity of symbols occupied by the CORESET #0 is 2, and the frequency domain offset between the SSB and the CORESET #0 is 2 RBs. In this case, a frequency domain position and a length that are indicated and that are of the CORESET #0 are shown in FIG. 4. In addition, terminal devices of different types may use different $2^X$ rows in the table shown in Table 5 to indicate a CORESET #0 parameter. For example, a CORESET #0 parameter obtained by the second terminal device is indicated by using one of the first $2^X$ rows, and a CORESET #0 parameter obtained by the first terminal device is indicated by using another row of the last $2^X$ rows.

In addition, the terminal device may further determine the CSS by using a table shown in the following Table 6.

**Table 6**

| Index (index) | O | Quantity of search space per slot (number of search space sets per slot) | M | 1st symbol index (first symbol index) |
|---|---|---|---|---|
| 0 | 0 | 1 | 1 | 0 |
| 1 | 0 | 2 | 1/2 | {0, if i is an even number}, { $N_{\text{symb}}^{\text{CORESET}}$ , if i is an odd number} |
| 2 | 2 | 1 | 1 | 0 |
| 3 | 2 | 2 | 1/2 | {0, if i is an even number}, { $N_{\text{symb}}^{\text{CORESET}}$ , if i is an odd number} |
| 4 | 5 | 1 | 1 | 0 |
| 5 | 5 | 2 | 1/2 | {0, if i is an even number}, { $N_{\text{symb}}^{\text{CORESET}}$ , if i is an odd number} |
| 6 | 7 | 1 | 1 | 0 |
| 7 | 7 | 2 | 1/2 | {0, if i is an even number}, { $N_{\text{symb}}^{\text{CORESET}}$ , if i is an odd number} |
| 8 | 0 | 1 | 2 | 0 |
| 9 | 5 | 1 | 2 | 0 |
| 10 | 0 | 1 | 1 | 1 |
| 11 | 0 | 1 | 1 | 2 |
| 12 | 2 | 1 | 1 | 1 |
| 13 | 2 | 1 | 1 | 2 |
| 14 | 5 | 1 | 1 | 1 |

Similarly, in this embodiment of this application, a table shown in Table 6 may be defined in a protocol, and Y bits indicate a row in the first $2^Y$ rows. For example, three bits indicate one of the first eight rows. Information in this row may indicate a quantity (number of search space sets per slot) of search space per slot, and indicate parameters O and M, so that the terminal device can calculate $n_0$ based on $n_0 = \left(O \cdot 2^\mu + \lfloor i \cdot M \rfloor\right) \bmod N_{\text{slot}}^{\text{frame},\mu}$, and can further obtain a start slot of the CSS in a frame in which the SSB is located, that is, the $(n_0+1)^{\text{th}}$ slot. It is specified in the protocol that the CSS occupies two consecutive slots, that is, occupies an $(n_0+1)^{\text{th}}$ slot and an $(n_0+2)^{\text{th}}$ slot. i represents an index of the SSB, and $\mu$ is a parameter indicating a subcarrier spacing. When $\mu$ =0, the subcarrier spacing is 15 kHz. When $\mu$ =1, the subcarrier spacing is 30 kHz. The rest can be deduced by analogy. In addition, terminal devices of different types may use different $2^Y$ rows in the table shown in Table 6 to indicate a CSS parameter. For example, a CSS parameter obtained by the second terminal device is indicated by using one of the first $2^Y$ rows, and a CSS parameter obtained by the first terminal device is indicated by using another row of the last $2^Y$ rows.

As shown in Table 6, the 1st symbol position (first symbol index) of the search space in a slot is further indicated. Therefore, as shown in FIG. 5, the CSS is determined. For example, the network device indicates the 3rd row (index=2) in Table 6. For SSBindex=1 (i=1) and SCS=15 kHz ($\mu$ =0), $n_0=(2*2^0+1*1)=3$ is calculated. To be specific, the CSS occupies two consecutive slots starting from the 4th slot in a frame in which the SSB is located. In each of the two frames, the 1st symbol is used as a start symbol of the CORESET #0, and a PDCCH is searched for in a frequency range and a symbol range that are determined and that are of the CORESET #0. That is, DCI scrambled by an SI-RNTI is searched for.

In this embodiment of this application, both Table 5 and Table 6 may be used to determine the CORESET #0 and/or the CSS indicated by the network device to the REDCAP terminal device. This is not limited.

A current terminal device cannot obtain a SIB 1 by using the non-CD-SSB. In this embodiment of this application, the REDCAP terminal device accesses a network by using the non-CD-SSB for the legacy terminal device, and the REDCAP terminal device jumps to a CD-SSB different from that for the legacy terminal device. Information bits that are in the PBCH or the MIB of the non-CD-SSB and that have no indication meaning to the legacy terminal device are determined, and these bits indicate whether the REDCAP terminal device needs to jump, and indicate a GSCN of a new SSB to which the REDCAP terminal device jumps or a CORESET #0 and CSS when the REDCAP terminal device does not jump, to achieve a technical effect that behavior of the legacy terminal device is not affected, and the REDCAP terminal device can access a network by using the non-CD-SSB.

In the foregoing embodiments provided in this application, the methods provided in embodiments of this application are separately described from the perspective of the network device, the terminal device, and interaction between the network device and the terminal device. To implement the functions in the method provided in embodiments of this application, the network device and the terminal device each may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and configuration constraints of the technical solutions.

It should be noted that, for brevity, the foregoing method embodiments are represented as a series of actions. But a person skilled in the art should appreciate that embodiments of this application is not limited to the order of the described actions, because according to embodiments of this application, some steps may use another order or occur simultaneously.

To better implement the solutions of embodiments of this application, a related apparatus for implementing the solutions is further provided below.

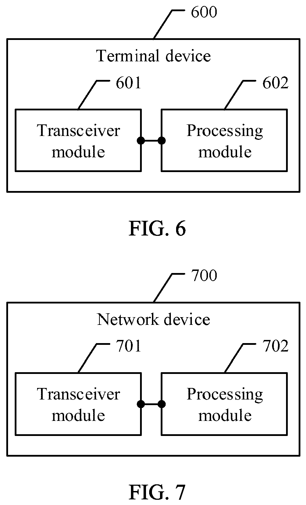

As shown in FIG. 6, an embodiment of this application provides a communication apparatus. The communication apparatus may be a terminal device, an apparatus in the terminal device, or an apparatus that can be collaboratively used with the terminal device. FIG. 6 shows an example in which the communication apparatus is a terminal device 600. For example, the terminal device 600 may be the foregoing second terminal device. The terminal device 600 may include a transceiver module 601 and a processing module 602.

In a possible implementation,

the transceiver module is configured to receive a first synchronization signal block SSB from a network device, where the first SSB is a first-type SSB for a first terminal device; and
the processing module is configured to: if the first SSB is a second-type SSB for a second terminal device, determine a first control-resource set and/or first common search space based on the first SSB.

In a possible implementation, the transceiver module is configured to: if the first SSB is a first-type SSB for a second terminal device, receive a second SSB from the network device. The processing module is configured to determine a second control-resource set and/or second common search space based on the second SSB.

In a possible implementation, the first SSB includes first indication information.

When the first indication information is a first value, the first indication information indicates that the first SSB is the second-type SSB for the second terminal device.

When the first indication information is a second value, the first indication information indicates that the first SSB is the first-type SSB for the second terminal device.

In a possible implementation, the first indication information is carried by at least one of a common subcarrier spacing field, a demodulation reference signal-type A-position field, an intra-frequency reselection field, a spare field, and a reserved field corresponding to a frequency range FR 1 in the first SSB.

In a possible implementation, the first SSB further includes second indication information.

The second indication information indicates offset information of the second SSB.

In a possible implementation, the offset information of the second SSB includes first offset information of a global synchronization channel number GSCN of the second SSB relative to a GSCN of the first SSB.

The second indication information includes a first bit and a second bit.

The second bit indicates the first offset information of the GSCN of the second SSB relative to the GSCN of the first SSB.

The GSCN of the second SSB and the GSCN of the first SSB satisfy the following relationship:

$$N_{GSCN2}^{Reference} = N_{GSCN1}^{Reference} + N_{GSCN1}^{Offset} + a \times n \times N'^{Offset}_{GSCN}.$$

$N_{GSCN2}^{Reference}$ is the GSCN of the second SSB, $N_{GSCN1}^{Reference}$ represents the GSCN of the first SSB, $N_{GSCN1}^{Offset}$ represents the first offset, a is a value indicated by the first bit, a value of a is 1 or -1, n is an adjustment coefficient, and $N'^{Offset}_{GSCN}$ represents the first offset information of the GSCN of the second SSB relative to the GSCN of the first SSB.

In a possible implementation, the offset information of the second SSB includes second offset information of a GSCN of the second SSB relative to a GSCN of the first SSB.

The second indication information includes a first bit and a second bit.

The second bit indicates the second offset information of the GSCN of the second SSB relative to the GSCN of the first SSB.

The GSCN of the second SSB and the GSCN of the first SSB satisfy the following relationship:

$$N_{GSCN2}^{Reference} = N_{GSCN1}^{Reference} + a \times n \times N''^{Offset}_{GSCN}.$$

$N_{GSCN2}^{Reference}$ is the GSCN of the second SSB, $N_{GSCN1}^{Reference}$ represents the GSCN of the first SSB, a is a value indicated by the first bit, a value of a is 1 or -1, n is an adjustment coefficient, and $N''^{Offset}_{GSCN}$ represents the second offset information of the GSCN of the second SSB relative to the GSCN of the first SSB.

In a possible implementation, the offset information of the second SSB includes a GSCN offset of the second SSB.

The second indication information includes a first bit and a second bit.

The first bit indicates that the GSCN offset of the second SSB is a positive offset or a negative offset.

The second bit indicates the GSCN offset of the second SSB.

A frequency range of the second SSB is $[N_{GSCN}^{Reference} - N_{GSCN}^{Start} - b \times n \times N'''^{Offset}_{GSCN}, N_{GSCN}^{Reference} + N_{GSCN}^{End} + b \times n \times N'''^{Offset}_{GSCN}]$ . $N_{GSCN}^{Reference}$ is a GSCN of the first SSB, $N_{GSCN}^{Start}$ is a GSCN start value, b is a value indicated by the first bit, a value of b is 1 or -1, n is an adjustment coefficient, $N_{GSCN}^{End}$ is a GSCN end value, and $N'''^{Offset}_{GSCN}$ represents the GSCN offset of the second SSB.

In a possible implementation, the second indication information is carried by at least one of the common subcarrier spacing field, the demodulation reference signal-type A-position field, the intra-frequency reselection field, the spare field, and the reserved field corresponding to the frequency range FR 1 in the first SSB.

In a possible implementation, the first SSB includes third indication information.

The third indication information indicates the first control-resource set and/or the first common search space.

In a possible implementation, the third indication information is carried by at least one of the common subcarrier spacing field, the demodulation reference signal-type A-position field, the intra-frequency reselection field, the spare field, and the reserved field corresponding to the frequency range FR 1 in the first SSB.

In a possible implementation,

the processing module is configured to receive a first synchronization signal block SSB from a network device by using the transceiver module, where the first SSB is a first-type SSB for a first terminal device; and

the processing module is configured to: if the first SSB is a first-type SSB for a second terminal device, receive a second SSB from the network device by using the transceiver module, and determine a second control-resource set and/or second common search space based on the second SSB.

The first SSB includes first indication information, and a second value of the first indication information indicates that the first SSB is the first-type SSB for the second terminal device.

The first indication information is carried by at least one of a common subcarrier spacing field, a demodulation reference signal-type A-position field, an intra-frequency reselection field, a spare field, and a reserved field corresponding to a frequency range FR 1 in the first SSB.

As shown in FIG. 7, an embodiment of this application provides a communication apparatus. The communication apparatus may be a network device, an apparatus in the network device, or an apparatus that can be collaboratively used with the network device. FIG. 7 is shown by using an example in which the communication apparatus is a network device 700. The network device 700 may include a transceiver module 701 and a processing module 702.

In a possible implementation,
the processing module is configured to send a first synchronization signal block SSB to a second terminal device by using the transceiver module, where the first SSB is a first-type SSB for a first terminal device.

If the first SSB is a second-type SSB for the second terminal device, the first SSB indicates a first control-resource set and/or first common search space to the second terminal device.

In a possible implementation, the transceiver module is configured to send a second SSB to the second terminal device.

If the first SSB is a first-type SSB for the second terminal device, the second SSB indicates a second control-resource set and/or second common search space to the second terminal device.

In a possible implementation, the first SSB includes first indication information.

When the first indication information is a first value, the first indication information indicates that the first SSB is the second-type SSB for the second terminal device.

When the first indication information is a second value, the first indication information indicates that the first SSB is the first-type SSB for the second terminal device.

In a possible implementation, the first indication information is carried by at least one of a common subcarrier spacing field, a demodulation reference signal-type A-position field, an intra-frequency reselection field, a spare field, and a reserved field corresponding to a frequency range FR 1 in the first SSB.

In a possible implementation, the first SSB further includes second indication information.

The second indication information indicates offset information of the second SSB.

In a possible implementation, the offset information of the second SSB includes first offset information of a global synchronization channel number GSCN of the second SSB relative to a GSCN of the first SSB.

The second indication information includes a first bit and a second bit.

The second bit indicates the first offset information of the GSCN of the second SSB relative to the GSCN of the first SSB.

The GSCN of the second SSB and the GSCN of the first SSB satisfy the following relationship:

$$N_{GSCN2}^{Reference} = N_{GSCN1}^{Reference} + N_{GSCN1}^{Offset} + a \times n \times N'^{Offset}_{GSCN}.$$

$N_{GSCN2}^{Reference}$ is the GSCN of the second SSB, $N_{GSCN1}^{Reference}$ represents the GSCN of the first SSB, $N_{GSCN1}^{Offset}$ represents the first offset, a is a value indicated by the first bit, a value of a is 1 or -1, n is an adjustment coefficient, and $N'^{Offset}_{GSCN}$ represents the first offset information of the GSCN of the second SSB relative to the GSCN of the first SSB.

In a possible implementation, the offset information of the second SSB includes second offset information of a GSCN of the second SSB relative to a GSCN of the first SSB.

The second indication information includes a first bit and a second bit.

The second bit indicates the second offset information of the GSCN of the second SSB relative to the GSCN of the first SSB.

The GSCN of the second SSB and the GSCN of the first SSB satisfy the following relationship:

$$N_{GSCN2}^{Reference} = N_{GSCN1}^{Reference} + a \times n \times N''^{Offset}_{GSCN}.$$

$N_{GSCN2}^{Reference}$ is the GSCN of the second SSB, $N_{GSCN1}^{Reference}$ represents the GSCN of the first SSB, a is a value indicated by the first bit, a value of a is 1 or -1, n is an adjustment coefficient, and $N''^{Offset}_{GSCN}$ represents the second offset information of the GSCN of the second SSB relative to the GSCN of the first SSB.

In a possible implementation, the offset information of the second SSB includes a GSCN offset of the second SSB.

The second indication information includes a first bit and a second bit.

The first bit indicates that the GSCN offset of the second SSB is a positive offset or a negative offset.

The second bit indicates the GSCN offset of the second SSB.

A frequency range of the second SSB is $[N_{GSCN}^{Reference} - N_{GSCN}^{Start} - b \times n \times N'''^{Offset}_{GSCN}, N_{GSCN}^{Reference} + N_{GSCN}^{End} + b \times n \times N'''^{Offset}_{GSCN}]$. $N_{GSCN}^{Reference}$ is a GSCN of the first SSB, $N_{GSCN}^{Start}$ is a GSCN start value, b is a value indicated by the first bit, a value of b is 1 or -1, n is an adjustment coefficient, $N_{GSCN}^{End}$ is a GSCN end value, and $N'''^{Offset}_{GSCN}$ represents the GSCN offset of the second SSB.

In a possible implementation, the second indication information is carried by at least one of the common subcarrier spacing field, the demodulation reference signal-type A-position field, the intra-frequency reselection field, the spare field, and the reserved field corresponding to the frequency range FR 1 in the first SSB.

In a possible implementation, the first SSB includes third indication information. The third indication information indicates the first control-resource set and/or the first common search space.

In a possible implementation, the third indication information is carried by at least one of the common subcarrier spacing field, the demodulation reference signal-type A-position field, the intra-frequency reselection field, the spare field, and the reserved field corresponding to the frequency range FR 1 in the first SSB.

In a possible implementation,
the processing module is configured to send a first synchronization signal block SSB to a second terminal device by using the transceiver module, where the first SSB is a first-type SSB for a first terminal device.

The processing module is configured to send a second SSB to the second terminal device by using the transceiver module.

The second SSB indicates a second control-resource set and/or second common search space to the second terminal device.

The first SSB includes first indication information, and a second value of the first indication information indicates that the first SSB is the first-type SSB for the second terminal device.

The first indication information is carried by at least one of a common subcarrier spacing field, a demodulation reference signal-type A-position field, an intra-frequency reselection field, a spare field, and a reserved field corresponding to a frequency range FR 1 in the first SSB.

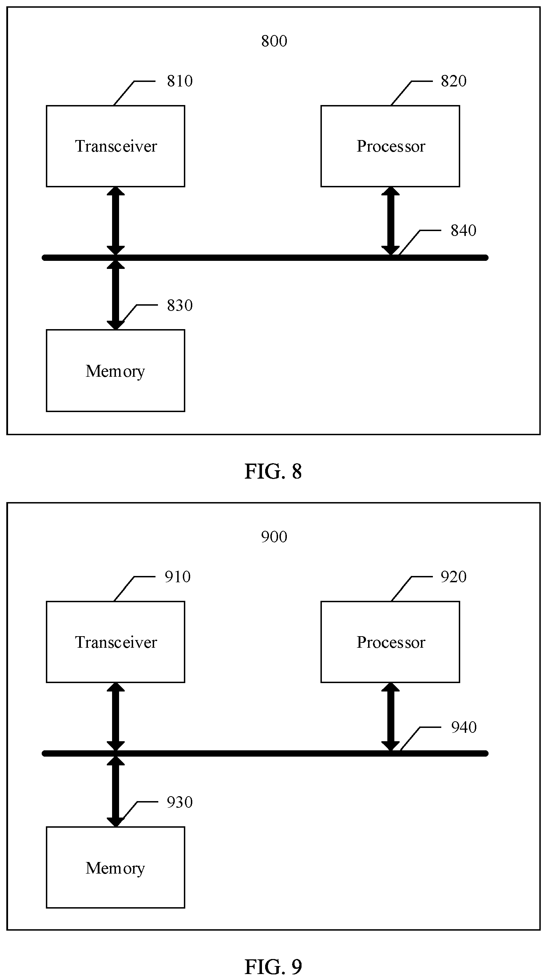

FIG. 8 shows an apparatus 800 according to an embodiment of this application. The apparatus 800 is configured to implement functions of the second terminal device in the foregoing method. The apparatus may be a second terminal device, an apparatus in the second terminal device, or an apparatus that can be collaboratively used with the second terminal device. The apparatus may be a chip system. In this embodiment of this application, the chip system may include a chip, or may include a chip and another discrete component. The apparatus 800 includes at least one processor 820, configured to implement the functions of the second terminal device in the method provided in embodiments of this application. For example, the processor 820 may receive information such as downlink control information and configuration information of a control resource set, and parse the foregoing information. For details, refer to detailed descriptions in the method example. Details are not described herein again.

The apparatus 800 may further include at least one memory 830, configured to store program instructions and/or data. The memory 830 is coupled to the processor 820. The coupling in this embodiment of this application may be an indirect coupling or a communication connection between apparatuses, units, or modules in an electrical form, a mechanical form, or another form, and is used for information exchange between the apparatuses, the units, or the modules. The processor 820 may operate in collaboration with the memory 830. The processor 820 may execute the program instructions stored in the memory 830. At least one of the at least one memory may be included in the processor. The apparatus 800 may further include a communication interface. The communication interface may be implemented in a plurality of manners. For example, the communication interface may be a transceiver, an interface, a bus, a circuit, a pin, or an apparatus that can implement a transceiver function. In FIG. 8, an example in which the communication interface is a transceiver 810 is used for description. The transceiver 810 is configured to communicate with another device by using a transmission medium, so that the apparatus in the apparatus 800 may communicate with another device. For example, the another device may be a network device. The processor 820 receives or sends data by using the transceiver 810, and is configured to implement the method performed by the second terminal device in the embodiment corresponding to FIG. 1.

In this embodiment of this application, a specific connection medium among the transceiver 810, the processor 820 and the memory 830 is not limited. In this embodiment of this application, in FIG. 8, the memory 830, the processor 820, and the transceiver 810 are connected to each other by using a bus 840. The bus is represented by using a thick line in FIG. 8. A manner of connection between other components is only schematically described, but is not used as a limitation. The bus may be classified into an address bus, a data bus, a control bus, and the like. For ease of representation, only one thick line is for representing the bus in FIG. 8, but this does not mean that there is only one bus or only one type of bus.

FIG. 9 shows an apparatus 900 according to an embodiment of this application. The apparatus 900 is configured to implement functions of the network device in the foregoing method. The apparatus may be a network device, an apparatus in the network device, or an apparatus that can be collaboratively used with the network device. The apparatus may be a chip system. The apparatus 900 includes at least one processor 920, configured to implement the functions of the network device in the method provided in embodiments of this application. For example, the processor 920 may generate and send information such as downlink control information and configuration information of a control resource set. For details, refer to detailed descriptions in the method example. Details are not described herein again.

The apparatus 900 may further include at least one memory 930, configured to store program instructions and/or data. The memory 930 is coupled to the processor 920. The coupling in this embodiment of this application may be an indirect coupling or a communication connection between apparatuses, units, or modules in an electrical form, a mechanical form, or another form, and is used for information exchange between the apparatuses, the units, or the modules. The processor 920 may operate in collaboration with the memory 930. The processor 920 may execute the program instructions stored in the memory 930. At least one of the at least one memory may be included in the processor. The apparatus 900 may further include a communication interface. The communication interface may be implemented in a plurality of manners. For example, the communication interface may be a transceiver, an interface, a bus, a circuit, or an apparatus that can implement a transceiver function. In FIG. 9, an example in which the communication interface is a transceiver 99 is used for description. The transceiver 99 is configured to communicate with another device by using a transmission medium, so that the apparatus in the apparatus 900 may communicate with another device. For example, the another device may be a terminal device. The processor 920 receives or sends data by using the transceiver 910, and is configured to implement the method performed by the network device in the embodiment corresponding to FIG. 1.

In this embodiment of this application, a specific connection medium among the transceiver 910, the processor 920 and the memory 930 is not limited. In this embodiment of this application, in FIG. 9, the memory 930, the processor 920, and the transceiver 910 are connected to each other by using a bus 940. The bus is represented by using a thick line in FIG. 9. A manner of connection between other components is only schematically described, but is not used as a limitation. The bus may be classified into an address bus, a data bus, a control bus, and the like. For ease of representation, only one thick line is for representing the bus in FIG. 9, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-transitory memory, such as a hard disk drive (hard disk drive, HDD) or a solid-state drive (solid-state drive, SSD), or may be a transitory memory, such as a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

All or a part of the technical solutions provided in embodiments of this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, when there is no logical conflict, embodiments may be mutually referenced. For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

It is clear that, a person skilled in the art can make various modifications and variations to this application without departing from the scope of this application as defined by the appended set of claims.

(subCarrierSpacingCommon) field, the demodulation reference signal-type A-position (dmrs-TypeA-Position) field, the intra-frequency reselection (intraFreqReselection) field, the spare (spare) field, and the reserved field corresponding to the frequency range (frequency range, FR) 1 in Table 4 occupy four bits in total. These bits may be used according to the following rule.

In the foregoing six bits or four bits, one bit is denoted as B1, and B1 indicates whether the SSB is a non-CD-SSB for the REDCAP terminal device (used for determining in step S2). For example, when B1=1, it indicates that the SSB is a non-CD-SSB for the REDCAP terminal device. When B1=0, it indicates that the SSB is a CD-SSB for the REDCAP terminal device.

In addition to B1, five bits remain in the six bits, and three bits remain in the four bits in addition to B1. In this case, the five bits or the three bits are denoted as B2, and B2 may represent the following two meanings.

If B1=1, that is, when the SSB is the non-CD-SSB for the REDCAP terminal device, B2 indicates an offset (offset) value of a new SSB frequency relative to the legacy terminal device. The offset is used by the REDCAP terminal to jump to a CD-SSB for the REDCAP terminal.

If B1=0, that is, when the SSB is a CD-SSB for the REDCAP terminal device, B2 indicates a CORESET #0 and/or CSS, so that the REDCAP terminal device searches, in an indicated time-frequency range, for DCI that is scrambled by using a system information-radio network temporary identifier (system information-radio network temporary indicator, SI-RNTI), and obtains a SIB 1 and the like based on an indication of the DCI after the DCI is found.

In this embodiment of this application, the B2 bits indicate frequency information of the CD-SSB for the REDCAP terminal device. For example, the B2 bits represent a GSCN offset, and B2 may be the first bit and the second bit.

In this embodiment of this application, the B2 bits may indicate the CORESET #0 and/or the CSS to the REDCAP terminal device by using any one of the following methods:

Method 1: The CORESET #0 is a value predefined in a protocol, and the B2 bits indicate the CSS.
Method 2: The CSS is a value predefined in a protocol, and the B2 bits indicate the CORESET #0.
Method 3: B2=B21+B22, a B21 bit in the B2 bits indicates the CORESET #0, a B22 bit indicates the CSS, and both B21 and B22 are integers greater than or equal to 0.

In the foregoing three methods, the CORESET #0 and/or the CSS may be indicated by using a method of searching a table. Method 1 and Method 2 may be used as special examples of Method 3. For unified description, X bits are for representing a quantity of bits indicating the CORESET #0, and Y bits are for representing a quantity of bits indicating the CSS below. In this case, X+Y=B2, and both X and Y are integers greater than or equal to 0.

The following describes how to determine the CORESET #0 and the CSS by using the method of searching a table. For example, Table 5 is for determining the CORESET #0, and Table 6 is for determining the CSS.

**Table 5**

| Index (index) | Synchronization signal (synchronization signal, SS) or PBCH block, and CORESET multiplexing pattern (multiplexing pattern) | Quantity of resource blocks (which is represented by $N_{RB}^{CORESET}$) | Quantity of symbols (which is represented by $N_{symb}^{CORESET}$) | Offset (Offset) of the resource block |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |

(continued)

| Index (index) | Synchronization signal (synchronization signal, SS) or PBCH block, and CORESET multiplexing pattern (multiplexing pattern) | Quantity of resource blocks (which is represented by $N_{\mathrm{RB}}^{\mathrm{CORESET}}$ ) | Quantity of symbols (which is represented by $N_{\mathrm{symb}}^{\mathrm{CORESET}}$ ) | Offset (Offset) of the resource block |
|---|---|---|---|---|
| 15 | Reserved | | | |

In this embodiment of this application, a table shown in Table 5 may be defined, and X bits indicate a row in the first $2^X$ rows. For example, two bits indicate one row in the first four rows, to indicate a time-frequency multiplexing manner of the SSB and the CORESET #0, a quantity $N_{\mathrm{RB}}^{\mathrm{CORESET}}$ (Number of RBs) of resource blocks occupied by the CORESET #0, a quantity $N_{\mathrm{symb}}^{\mathrm{CORESET}}$ (Number of Symbols) of symbols occupied by the CORESET #0, and a frequency domain offset (Offset) between the SSB and the CORESET #0. For example, the frequency domain offset between the SSB and the CORESET #0 is a resource block (resource block, RB) offset between lowest frequencies of the SSB and the CORESET #0. Therefore, a frequency resource position of the CORESET #0 is determined. For example, if the network device indicates the second row (index=1) in Table 5, the multiplexing pattern of the SSB and the CORESET #0 is the pattern 1 shown in the second column in Table 5, the quantity of RBs occupied by the CORESET #0 is 24, the quantity of symbols occupied by the CORESET #0 is 2, and the frequency domain offset between the SSB and the CORESET #0 is 2 RBs. In this case, a frequency domain position and a length that are indicated and that are of the CORESET #0 are shown in FIG. 4. In addition, terminal devices of different types may use different $2^X$ rows in the table shown in Table 5 to indicate a CORESET #0 parameter. For example, a CORESET #0 parameter obtained by the second terminal device is indicated by using one of the first $2^X$ rows, and a CORESET #0 parameter obtained by the first terminal device is indicated by using another row of the last $2^X$ rows.

In addition, the terminal device may further determine the CSS by using a table shown in the following Table 6.

**Table 6**

| Index (index) | O | Quantity of search space per slot (number of search space sets per slot) | M | 1st symbol index (first symbol index) |
|---|---|---|---|---|
| 0 | 0 | 1 | 1 | 0 |
| 1 | 0 | 2 | 1/2 | {0, if i is an even number}, { $N_{\mathrm{symb}}^{\mathrm{CORESET}}$ , if i is an odd number} |
| 2 | 2 | 1 | 1 | 0 |
| 3 | 2 | 2 | 1/2 | {0, if i is an even number}, { $N_{\mathrm{symb}}^{\mathrm{CORESET}}$ , if i is an odd number} |
| 4 | 5 | 1 | 1 | 0 |
| 5 | 5 | 2 | 1/2 | {0, if i is an even number}, { $N_{\mathrm{symb}}^{\mathrm{CORESET}}$ , if i is an odd number} |
| 6 | 7 | 1 | 1 | 0 |
| 7 | 7 | 2 | 1/2 | {0, if i is an even number}, { $N_{\mathrm{symb}}^{\mathrm{CORESET}}$ , if i is an odd number} |
| 8 | 0 | 1 | 2 | 0 |
| 9 | 5 | 1 | 2 | 0 |
| 10 | 0 | 1 | 1 | 1 |
| 11 | 0 | 1 | 1 | 2 |
| 12 | 2 | 1 | 1 | 1 |
| 13 | 2 | 1 | 1 | 2 |
| 14 | 5 | 1 | 1 | 1 |

Similarly, in this embodiment of this application, a table shown in Table 6 may be defined in a protocol, and Y bits indicate a row in the first $2^Y$ rows. For example, three bits indicate one of the first eight rows. Information in this row may indicate a quantity (number of search space sets per slot) of search space per slot, and indicate parameters O and M, so that the terminal device can calculate no based on $n_0 = \left(O \cdot 2^{\mu} + \lfloor i \cdot M \rfloor\right) \bmod N_{\text{slot}}^{\text{frame},\mu}$ , and can further obtain a start slot of the CSS in a frame in which the SSB is located, that is, the $(n_0+1)^{\text{th}}$ slot. It is specified in the protocol that the CSS occupies two consecutive slots, that is, occupies an $(n_0+1)^{\text{th}}$ slot and an $(n_0+2)^{\text{th}}$ slot. i represents an index of the SSB, and $\mu$ is a parameter indicating a subcarrier spacing. When $\mu$ =0, the subcarrier spacing is 15 kHz. When $\mu$ =1, the subcarrier spacing is 30 kHz. The rest can be deduced by analogy. In addition, terminal devices of different types may use different $2^Y$ rows in the table shown in Table 6 to indicate a CSS parameter. For example, a CSS parameter obtained by the second terminal device is indicated by using one of the first $2^Y$ rows, and a CSS parameter obtained by the first terminal device is indicated by using another row of the last $2^Y$ rows.

As shown in Table 6, the 1st symbol position (first symbol index) of the search space in a slot is further indicated. Therefore, as shown in FIG. 5, the CSS is determined. For example, the network device indicates the 3rd row (index=2) in Table 6. For SSBindex=1 (i=1) and SCS=15 kHz ( $\mu$ =0), $n_0$=(2*2^0+1*1)=3 is calculated. To be specific, the CSS occupies two consecutive slots starting from the 4th slot in a frame in which the SSB is located. In each of the two frames, the 1st symbol is used as a start symbol of the CORESET #0, and a PDCCH is searched for in a frequency range and a symbol range that are determined and that are of the CORESET #0. That is, DCI scrambled by an SI-RNTI is searched for.

In this embodiment of this application, both Table 5 and Table 6 may be used to determine the CORESET #0 and/or the CSS indicated by the network device to the REDCAP terminal device. This is not limited.

A current terminal device cannot obtain a SIB 1 by using the non-CD-SSB. In this embodiment of this application, the REDCAP terminal device accesses a network by using the non-CD-SSB for the legacy terminal device, and the REDCAP terminal device jumps to a CD-SSB different from that for the legacy terminal device. Information bits that are in the PBCH or the MIB of the non-CD-SSB and that have no indication meaning to the legacy terminal device are determined, and these bits indicate whether the REDCAP terminal device needs to jump, and indicate a GSCN of a new SSB to which the REDCAP terminal device jumps or a CORESET #0 and CSS when the REDCAP terminal device does not jump, to achieve a technical effect that behavior of the legacy terminal device is not affected, and the REDCAP terminal device can access a network by using the non-CD-SSB.

In the foregoing embodiments provided in this application, the methods provided in embodiments of this application are separately described from the perspective of the network device, the terminal device, and interaction between the network device and the terminal device. To implement the functions in the method provided in embodiments of this application, the network device and the terminal device each may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and configuration constraints of the technical solutions.

It should be noted that, for brevity, the foregoing method embodiments are represented as a series of actions. But a person skilled in the art should appreciate that embodiments of this application is not limited to the order of the described actions, because according to embodiments of this application, some steps may use another order or occur simultaneously.

To better implement the solutions of embodiments of this application, a related apparatus for implementing the solutions is further provided below.

As shown in FIG. 6, an embodiment of this application provides a communication apparatus. The communication apparatus may be a terminal device, an apparatus in the terminal device, or an apparatus that can be collaboratively used with the terminal device. FIG. 6 shows an example in which the communication apparatus is a terminal device 600. For example, the terminal device 600 may be the foregoing second terminal device. The terminal device 600 may include a transceiver module 601 and a processing module 602.

In a possible implementation,

the transceiver module is configured to receive a first synchronization signal block SSB from a network device, where the first SSB is a first-type SSB for a first terminal device; and
the processing module is configured to: if the first SSB is a second-type SSB for a second terminal device, determine a first control-resource set and/or first common search space based on the first SSB.

In a possible implementation, the transceiver module is configured to: if the first SSB is a first-type SSB for a second terminal device, receive a second SSB from the network device. The processing module is configured to determine a second control-resource set and/or second common search space based on the second SSB.

In a possible implementation, the first SSB includes first indication information.

When the first indication information is a first value, the first indication information indicates that the first SSB is the second-type SSB for the second terminal device.

When the first indication information is a second value, the first indication information indicates that the first SSB is the first-type SSB for the second terminal device.

In a possible implementation, the first indication information is carried by at least one of a common subcarrier spacing field, a demodulation reference signal-type A-position field, an intra-frequency reselection field, a spare field, and a reserved field corresponding to a frequency range FR 1 in the first SSB.

In a possible implementation, the first SSB further includes second indication information.

The second indication information indicates offset information of the second SSB.

In a possible implementation, the offset information of the second SSB includes first offset information of a global synchronization channel number GSCN of the second SSB relative to a GSCN of the first SSB.

The second indication information includes a first bit and a second bit.

The second bit indicates the first offset information of the GSCN of the second SSB relative to the GSCN of the first SSB.

The GSCN of the second SSB and the GSCN of the first SSB satisfy the following relationship:

$$N_{GSCN2}^{Reference} = N_{GSCN1}^{Reference} + N_{GSCN1}^{Offset} + a \times n \times N'^{Offset}_{GSCN}.$$

$N_{GSCN2}^{Reference}$ is the GSCN of the second SSB, $N_{GSCN1}^{Reference}$ represents the GSCN of the first SSB, $N_{GSCN1}^{Offset}$ represents the first offset, a is a value indicated by the first bit, a value of a is 1 or -1, n is an adjustment coefficient, and $N'^{Offset}_{GSCN}$ represents the first offset information of the GSCN of the second SSB relative to the GSCN of the first SSB.

In a possible implementation, the offset information of the second SSB includes second offset information of a GSCN of the second SSB relative to a GSCN of the first SSB.

The second indication information includes a first bit and a second bit.

The second bit indicates the second offset information of the GSCN of the second SSB relative to the GSCN of the first SSB.

The GSCN of the second SSB and the GSCN of the first SSB satisfy the following relationship:

$$N_{GSCN2}^{Reference} = N_{GSCN1}^{Reference} + a \times n \times N''^{Offset}_{GSCN}.$$

$N_{GSCN2}^{Reference}$ is the GSCN of the second SSB, $N_{GSCN1}^{Reference}$ represents the GSCN of the first SSB, a is a value indicated by the first bit, a value of a is 1 or -1, n is an adjustment coefficient, and $N''^{Offset}_{GSCN}$ represents the second offset information of the GSCN of the second SSB relative to the GSCN of the first SSB.

In a possible implementation, the offset information of the second SSB includes a GSCN offset of the second SSB.

The second indication information includes a first bit and a second bit.

The first bit indicates that the GSCN offset of the second SSB is a positive offset or a negative offset.

The second bit indicates the GSCN offset of the second SSB.

A frequency range of the second SSB is $[N_{GSCN}^{Reference} - N_{GSCN}^{Start} - b \times n \times N'''^{Offset}_{GSCN}, N_{GSCN}^{Reference} + N_{GSCN}^{End} + b \times n \times N'''^{Offset}_{GSCN}]$. $N_{GSCN}^{Reference}$ is a GSCN of the first SSB, $N_{GSCN}^{Start}$ is a GSCN start value, b is a value indicated by the first bit, a value of b is 1 or -1, n is an adjustment coefficient, $N_{GSCN}^{End}$ is a GSCN end value, and $N'''^{Offset}_{GSCN}$ represents the GSCN offset of the second SSB.

In a possible implementation, the second indication information is carried by at least one of the common subcarrier spacing field, the demodulation reference signal-type A-position field, the intra-frequency reselection field, the spare field, and the reserved field corresponding to the frequency range FR 1 in the first SSB.

In a possible implementation, the first SSB includes third indication information.

The third indication information indicates the first control-resource set and/or the first common search space.

In a possible implementation, the third indication information is carried by at least one of the common subcarrier spacing field, the demodulation reference signal-type A-position field, the intra-frequency reselection field, the spare field, and the reserved field corresponding to the frequency range FR 1 in the first SSB.

In a possible implementation,

the processing module is configured to receive a first synchronization signal block SSB from a network device by using the transceiver module, where the first SSB is a first-type SSB for a first terminal device; and
the processing module is configured to: if the first SSB is a first-type SSB for a second terminal device, receive a second SSB from the network device by using the transceiver module, and determine a second control-resource set and/or second common search space based on the second SSB.

The first SSB includes first indication information, and a second value of the first indication information indicates that the first SSB is the first-type SSB for the second terminal device.

The first indication information is carried by at least one of a common subcarrier spacing field, a demodulation reference signal-type A-position field, an intra-frequency reselection field, a spare field, and a reserved field corresponding to a frequency range FR 1 in the first SSB.

As shown in FIG. 7, an embodiment of this application provides a communication apparatus. The communication apparatus may be a network device, an apparatus in the network device, or an apparatus that can be collaboratively used with the network device. FIG. 7 is shown by using an example in which the communication apparatus is a network device 700. The network device 700 may include a transceiver module 701 and a processing module 702.

In a possible implementation,
the processing module is configured to send a first synchronization signal block SSB to a second terminal device by using the transceiver module, where the first SSB is a first-type SSB for a first terminal device.

If the first SSB is a second-type SSB for the second terminal device, the first SSB indicates a first control-resource set and/or first common search space to the second terminal device.

In a possible implementation, the transceiver module is configured to send a second SSB to the second terminal device.

If the first SSB is a first-type SSB for the second terminal device, the second SSB indicates a second control-resource set and/or second common search space to the second terminal device.

In a possible implementation, the first SSB includes first indication information.

When the first indication information is a first value, the first indication information indicates that the first SSB is the second-type SSB for the second terminal device.

When the first indication information is a second value, the first indication information indicates that the first SSB is the first-type SSB for the second terminal device.

In a possible implementation, the first indication information is carried by at least one of a common subcarrier spacing field, a demodulation reference signal-type A-position field, an intra-frequency reselection field, a spare field, and a reserved field corresponding to a frequency range FR 1 in the first SSB.

In a possible implementation, the first SSB further includes second indication information.

The second indication information indicates offset information of the second SSB.

In a possible implementation, the offset information of the second SSB includes first offset information of a global synchronization channel number GSCN of the second SSB relative to a GSCN of the first SSB.

The second indication information includes a first bit and a second bit.

The second bit indicates the first offset information of the GSCN of the second SSB relative to the GSCN of the first SSB.

The GSCN of the second SSB and the GSCN of the first SSB satisfy the following relationship:

$$N_{GSCN2}^{Reference} = N_{GSCN1}^{Reference} + N_{GSCN1}^{Offset} + a \times n \times N'^{Offset}_{GSCN}.$$

$N_{GSCN2}^{Reference}$ is the GSCN of the second SSB, $N_{GSCN1}^{Reference}$ represents the GSCN of the first SSB, $N_{GSCN1}^{Offset}$ represents the first offset, a is a value indicated by the first bit, a value of a is 1 or -1, n is an adjustment coefficient, and $N'^{Offset}_{GSCN}$ represents the first offset information of the GSCN of the second SSB relative to the GSCN of the first SSB.

In a possible implementation, the offset information of the second SSB includes second offset information of a GSCN of the second SSB relative to a GSCN of the first SSB.

The second indication information includes a first bit and a second bit.

The second bit indicates the second offset information of the GSCN of the second SSB relative to the GSCN of the first SSB.

The GSCN of the second SSB and the GSCN of the first SSB satisfy the following relationship:

$$N_{GSCN2}^{Reference} = N_{GSCN1}^{Reference} + a \times n \times N''^{Offset}_{GSCN}.$$

$N_{GSCN2}^{Reference}$ is the GSCN of the second SSB, $N_{GSCN1}^{Reference}$ represents the GSCN of the first SSB, a is a value indicated by the first bit, a value of a is 1 or -1, n is an adjustment coefficient, and $N''^{Offset}_{GSCN}$ represents the second offset information of the GSCN of the second SSB relative to the GSCN of the first SSB.

In a possible implementation, the offset information of the second SSB includes a GSCN offset of the second SSB.

The second indication information includes a first bit and a second bit.

The first bit indicates that the GSCN offset of the second SSB is a positive offset or a negative offset.

The second bit indicates the GSCN offset of the second SSB.

A frequency range of the second SSB is $[N^{Reference}_{GSCN} - N^{Start}_{GSCN} - b \times n \times N'''^{Offset}_{GSCN}, N^{Reference}_{GSCN} + N^{End}_{GSCN} + b \times n \times N'''^{Offset}_{GSCN}]$. $N^{Reference}_{GSCN}$ is a GSCN of the first SSB, $N^{Start}_{GSCN}$ is a GSCN start value, b is a value indicated by the first bit, a value of b is 1 or -1, n is an adjustment coefficient, $N^{End}_{GSCN}$ is a GSCN end value, and $N'''^{Offset}_{GSCN}$ represents the GSCN offset of the second SSB.

In a possible implementation, the second indication information is carried by at least one of the common subcarrier spacing field, the demodulation reference signal-type A-position field, the intra-frequency reselection field, the spare field, and the reserved field corresponding to the frequency range FR 1 in the first SSB.

In a possible implementation, the first SSB includes third indication information. The third indication information indicates the first control-resource set and/or the first common search space.

In a possible implementation, the third indication information is carried by at least one of the common subcarrier spacing field, the demodulation reference signal-type A-position field, the intra-frequency reselection field, the spare field, and the reserved field corresponding to the frequency range FR 1 in the first SSB.

In a possible implementation,
the processing module is configured to send a first synchronization signal block SSB to a second terminal device by using the transceiver module, where the first SSB is a first-type SSB for a first terminal device.

The processing module is configured to send a second SSB to the second terminal device by using the transceiver module.

The second SSB indicates a second control-resource set and/or second common search space to the second terminal device.

The first SSB includes first indication information, and a second value of the first indication information indicates that the first SSB is the first-type SSB for the second terminal device.

The first indication information is carried by at least one of a common subcarrier spacing field, a demodulation reference signal-type A-position field, an intra-frequency reselection field, a spare field, and a reserved field corresponding to a frequency range FR 1 in the first SSB.

FIG. 8 shows an apparatus 800 according to an embodiment of this application. The apparatus 800 is configured to implement functions of the second terminal device in the foregoing method. The apparatus may be a second terminal device, an apparatus in the second terminal device, or an apparatus that can be collaboratively used with the second terminal device. The apparatus may be a chip system. In this embodiment of this application, the chip system may include a chip, or may include a chip and another discrete component. The apparatus 800 includes at least one processor 820, configured to implement the functions of the second terminal device in the method provided in embodiments of this application. For example, the processor 820 may receive information such as downlink control information and configuration information of a control resource set, and parse the foregoing information. For details, refer to detailed descriptions in the method example. Details are not described herein again.

The apparatus 800 may further include at least one memory 830, configured to store program instructions and/or data. The memory 830 is coupled to the processor 820. The coupling in this embodiment of this application may be an indirect coupling or a communication connection between apparatuses, units, or modules in an electrical form, a mechanical form, or another form, and is used for information exchange between the apparatuses, the units, or the modules. The processor 820 may operate in collaboration with the memory 830. The processor 820 may execute the program instructions stored in the memory 830. At least one of the at least one memory may be included in the processor. The apparatus 800 may further include a communication interface. The communication interface may be implemented in a plurality of manners. For example, the communication interface may be a transceiver, an interface, a bus, a circuit, a pin, or an apparatus that can implement a transceiver function. In FIG. 8, an example in which the communication interface is a transceiver 810 is used for description. The transceiver 810 is configured to communicate with another device by using a transmission medium, so that the apparatus in the apparatus 800 may communicate with another device. For example, the another device may be a network device. The processor 820 receives or sends data by using the transceiver 810, and is configured to implement the method performed by the second terminal device in the embodiment corresponding to FIG. 1.

In this embodiment of this application, a specific connection medium among the transceiver 810, the processor 820 and the memory 830 is not limited. In this embodiment of this application, in FIG. 8, the memory 830, the processor 820, and the transceiver 810 are connected to each other by using a bus 840. The bus is represented by using a thick line in FIG.

8. A manner of connection between other components is only schematically described, but is not used as a limitation. The bus may be classified into an address bus, a data bus, a control bus, and the like. For ease of representation, only one thick line is for representing the bus in FIG. 8, but this does not mean that there is only one bus or only one type of bus.

FIG. 9 shows an apparatus 900 according to an embodiment of this application. The apparatus 900 is configured to implement functions of the network device in the foregoing method. The apparatus may be a network device, an apparatus in the network device, or an apparatus that can be collaboratively used with the network device. The apparatus may be a chip system. The apparatus 900 includes at least one processor 920, configured to implement the functions of the network device in the method provided in embodiments of this application. For example, the processor 920 may generate and send information such as downlink control information and configuration information of a control resource set. For details, refer to detailed descriptions in the method example. Details are not described herein again.

The apparatus 900 may further include at least one memory 930, configured to store program instructions and/or data. The memory 930 is coupled to the processor 920. The coupling in this embodiment of this application may be an indirect coupling or a communication connection between apparatuses, units, or modules in an electrical form, a mechanical form, or another form, and is used for information exchange between the apparatuses, the units, or the modules. The processor 920 may operate in collaboration with the memory 930. The processor 920 may execute the program instructions stored in the memory 930. At least one of the at least one memory may be included in the processor. The apparatus 900 may further include a communication interface. The communication interface may be implemented in a plurality of manners. For example, the communication interface may be a transceiver, an interface, a bus, a circuit, or an apparatus that can implement a transceiver function. In FIG. 9, an example in which the communication interface is a transceiver 99 is used for description. The transceiver 99 is configured to communicate with another device by using a transmission medium, so that the apparatus in the apparatus 900 may communicate with another device. For example, the another device may be a terminal device. The processor 920 receives or sends data by using the transceiver 910, and is configured to implement the method performed by the network device in the embodiment corresponding to FIG. 1.

In this embodiment of this application, a specific connection medium among the transceiver 910, the processor 920 and the memory 930 is not limited. In this embodiment of this application, in FIG. 9, the memory 930, the processor 920, and the transceiver 910 are connected to each other by using a bus 940. The bus is represented by using a thick line in FIG. 9. A manner of connection between other components is only schematically described, but is not used as a limitation. The bus may be classified into an address bus, a data bus, a control bus, and the like. For ease of representation, only one thick line is for representing the bus in FIG. 9, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-transitory memory, such as a hard disk drive (hard disk drive, HDD) or a solid-state drive (solid-state drive, SSD), or may be a transitory memory, such as a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

All or a part of the technical solutions provided in embodiments of this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, when there is no logical conflict, embodiments may be mutually referenced.

For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

It is clearly that, a person skilled in the art can make various modifications and variations to this application without departing from the scope of this application as defined by the appended set of claims.

## Claims

1. A synchronization signal block transmission method performed by a second terminal device, comprising:

receiving (102) a first synchronization signal block, SSB, from a network device, wherein for terminal devices of different types, SSBs of different types are configured by the network device, wherein the first SSB is a first-type SSB for a first terminal device and the first SSB is a second-type SSB for the second terminal device, and wherein the first-type SSB is a non-cell defining SSB, non-CD-SSB and the second-type SSB is a cell defining SSB, CD-SSB; and
if the first SSB is the first-type SSB for the first terminal device and the first SSB is the second-type SSB for the second terminal device, determining (103) a first control-resource set and/or first common search space based on the first SSB,
wherein the first SSB comprises first indication information, and a first value of the first indication information indicates that the first SSB is the second-type SSB for the second terminal device, and
wherein the first indication information is carried by at least one of a common subcarrier spacing field, a demodulation reference signal-type A-position field, an intra-frequency reselection field, a spare field, and a reserved field corresponding to a frequency range, FR, in the first SSB.

2. The method according to claim 1, wherein the determining a first control-resource set and/or first common search space based on the first SSB comprises:
determining the first control-resource set and/or the first common search space by using at least one of the common subcarrier spacing field, the demodulation reference signal-type A-position field, the intra-frequency reselection field, the spare field, and the reserved field corresponding to the frequency range, FR, 1 in the first SSB.

3. A synchronization signal block transmission method performed by a second terminal device, comprising:

receiving a first synchronization signal block, SSB, from a network device, wherein for terminal devices of different types, SSBs of a same type are configured by the network device, wherein the first SSB is a first-type SSB for a first terminal device and the second terminal device, and wherein the first-type SSB is a non-cell defining SSB, non-CD-SSB; and
if the first SSB is the first-type SSB for the second terminal device, receiving a second SSB from the network device, and determining a second control-resource set and/or second common search space based on the second SSB, wherein
the first SSB comprises first indication information, and a second value of the first indication information indicates that the first SSB is the first-type SSB for the second terminal device; and
the first indication information is carried by at least one of a common subcarrier spacing field, a demodulation reference signal-type A-position field, an intra-frequency reselection field, a spare field, and a reserved field corresponding to a frequency range, FR, in the first SSB.

4. The method according to claim 3, wherein the first SSB further comprises second indication information, wherein the second indication information indicates offset information of the second SSB.

5. The method according to claim 4, wherein the offset information of the second SSB comprises first offset information of a global synchronization channel number, GSCN, of the second SSB relative to a GSCN of the first SSB; and

the second indication information comprises a first bit and a second bit, wherein
the GSCN of the second SSB and the GSCN of the first SSB satisfy the following relationship:

$$N_{\text{GSCN2}}^{\text{Reference}} = N_{\text{GSCN1}}^{\text{Reference}} + N_{\text{GSCN1}}^{\text{Offset}} + a \times n \times N'^{\text{Offset}}_{\text{GSCN}},$$

wherein

$N_{GSCN2}^{Reference}$ is the GSCN of the second SSB, $N_{GSCN1}^{Reference}$ represents the GSCN of the first SSB, $N_{GSCN1}^{Offset}$ represents a first offset, a is a value indicated by the first bit, a value of a is 1 or -1, n is an adjustment coefficient, and $N'^{Offset}_{GSCN}$ is a value indicated by the second bit.

6. The method according to claim 4, wherein the offset information of the second SSB comprises second offset information of a GSCN of the second SSB relative to a GSCN of the first SSB; and

the second indication information comprises a first bit and a second bit, wherein
the GSCN of the second SSB and the GSCN of the first SSB satisfy the following relationship:

$$N_{GSCN2}^{Reference} = N_{GSCN1}^{Reference} + a \times n \times N''^{Offset}_{GSCN},$$

wherein

$N_{GSCN2}^{Reference}$ is the GSCN of the second SSB, $N_{GSCN1}^{Reference}$ represents the GSCN of the first SSB, a is a value indicated by the first bit, a value of a is 1 or -1, n is an adjustment coefficient, and $N''^{Offset}_{GSCN}$ is a value indicated by the second bit.

7. The method according to claim 4, wherein the offset information of the second SSB comprises a GSCN offset of the second SSB; and

the second indication information comprises a first bit and a second bit, wherein
a frequency range of the second SSB is $[N_{GSCN}^{Reference} - N_{GSCN}^{Start} - b \times n \times N'''^{Offset}_{GSCN}, N_{GSCN}^{Reference} + N_{GSCN}^{End} + b \times n \times N'''^{Offset}_{GSCN}]$, wherein

$N_{GSCN}^{Reference}$ is a GSCN of the first SSB, $N_{GSCN}^{Start}$ is a GSCN start value, b is a value indicated by the first bit, a value of b is 1 or -1, n is an adjustment coefficient, $N_{GSCN}^{End}$ is a GSCN end value, and $N'''^{Offset}_{GSCN}$ is a value indicated by the second bit.

8. The method according to any one of claims 4 to 7, wherein the second indication information is carried by at least one of the common subcarrier spacing field, the demodulation reference signal-type A-position field, the intra-frequency reselection field, the spare field, and the reserved field corresponding to the frequency range, FR, in the first SSB.

9. A synchronization signal block transmission method performed by a network device, comprising:

sending (101) a first synchronization signal block, SSB, to a second terminal device, wherein for terminal devices of different types, SSBs of different types are configured by the network device, wherein the first SSB is a first-type SSB for a first terminal device and the first SSB is a second-type SSB for the second terminal device, and wherein the first-type SSB is a non-cell defining SSB, non-CD-SSB and the second-type SSB is a cell defining SSB, CD-SSB; and
if the first SSB is the first-type SSB for the first terminal device and the first SSB is the second-type SSB for the second terminal device, the first SSB indicates a first control-resource set and/or first common search space to the second terminal device,
wherein the first SSB comprises first indication information, and a first value of the first indication information indicates that the first SSB is the second-type SSB for the second terminal device, and
wherein the first indication information is carried by at least one of a common subcarrier spacing field, a demodulation reference signal-type A-position field, an intra-frequency reselection field, a spare field, and a reserved field corresponding to a frequency range, FR, in the first SSB.

10. A communication apparatus, comprising a processor and a memory, wherein the memory is coupled to the processor, and the processor is configured to perform the method according to any one of claims 1 to 8, or to perform the method according to claim 9.

11. A computer-readable storage medium, wherein the computer-readable storage medium stores instructions; and when the instructions are run on a computer, the computer is enabled to perform the method according to any one of claims 1 to 9.

12. A computer program product, comprising instructions, wherein when the instructions are run on a computer, the computer is enabled to perform the method according to any one of claims 1 to 9.

**Patentansprüche**

1. Verfahren zur Übertragung eines Synchronisationssignalblocks, das durch ein zweites Endgerät durchgeführt wird, das umfasst:

   Empfangen (102) eines ersten Synchronisationssignalblocks (SSB) von einer Netzwerkvorrichtung, wobei für Endgeräte unterschiedlichen Typs SSBs unterschiedlichen Typs durch die Netzwerkvorrichtung konfiguriert werden, wobei der erste SSB ein SSB vom ersten Typ für ein erstes Endgerät ist und der erste SSB ein SSB vom zweiten Typ für das zweite Endgerät ist, und wobei der SSB vom ersten Typ ein nicht zellendefinierender SSB (Nicht-CD-SSB) ist und der SSB vom zweiten Typ ein zellendefinierender SSB (CD-SSB) ist; und
   wenn der erste SSB der SSB vom ersten Typ für das erste Endgerät ist und der erste SSB der SSB vom zweiten Typ für das zweite Endgerät ist, Bestimmen (103) eines ersten Satzes von Steuerressourcen und/oder eines ersten gemeinsamen Suchraums auf der Grundlage des ersten SSB,
   wobei der erste SSB erste Angabeinformationen umfasst und ein erster Wert der ersten Angabeinformationen angibt, dass der erste SSB der SSB vom zweiten Typ für das zweite Endgerät ist, und
   wobei die ersten Angabeinformationen durch mindestens eines von einem gemeinsamen Unterträgerabstandsfeld, einem Positionsfeld für ein Demodulations-Referenzsignal vom Typ A, einem Intra-Frequenz-Reselektionsfeld, einem Reservefeld und einem reservierten Feld, das einem Frequenzbereich (FR) in dem ersten SSB entspricht, übertragen werden.

2. Verfahren nach Anspruch 1, wobei das Bestimmen eines ersten Satzes von Steuerressourcen und/oder eines ersten gemeinsamen Suchraums auf der Grundlage des ersten SSB Folgendes umfasst:
   Bestimmen des ersten Satzes von Steuerressourcen und/oder des ersten gemeinsamen Suchraums durch Verwenden von mindestens einem von dem gemeinsamen Unterträgerabstandsfeld, dem Positionsfeld für ein Demodulations-Referenzsignal vom Typ A, dem Intra-Frequenz-Reselektionsfeld, dem Reservefeld und dem reservierten Feld, das einem Frequenzbereich (FR) 1 in dem ersten SSB entspricht.

3. Verfahren zur Übertragung eines Synchronisationssignalblocks, das durch ein zweites Endgerät durchgeführt wird und Folgendes umfasst:

   Empfangen eines ersten Synchronisationssignalblocks (SSB) von einer Netzwerkvorrichtung, wobei für Endgeräte unterschiedlicher Typen SSBs desselben Typs durch die Netzwerkvorrichtung konfiguriert werden,
   wobei der erste SSB ein SSB vom ersten Typ für ein erstes Endgerät und das zweite Endgerät ist und wobei der SSB vom ersten Typ ein nicht zellendefinierender SSB (Nicht-CD-SSB) ist; und
   wenn der erste SSB der SSB vom ersten Typ für das zweite Endgerät ist, Empfangen eines zweiten SSB von der Netzwerkvorrichtung, und Bestimmen eines zweiten Satzes von Steuerressourcen und/oder eines zweiten gemeinsamen Suchraums auf der Grundlage des zweiten SSB, wobei
   der erste SSB erste Angabeinformationen umfasst, und ein zweiter Wert der ersten Angabeinformationen angibt, dass der erste SSB der SSB vom ersten Typ für das zweite Endgerät ist; und
   die ersten Angabeinformationen durch mindestens eines von einem gemeinsamen Unterträgerabstandsfeld, einem Positionsfeld für ein Demodulations-Referenzsignal vom Typ A, einem Intra-Frequenz-Reselektionsfeld, einem Reservefeld und einem reservierten Feld, das einem Frequenzbereich (FR) in dem ersten SSB entspricht, übertragen werden.

4. Verfahren nach Anspruch 3, wobei der erste SSB ferner zweite Angabeinformationen umfasst, wobei die zweiten Angabeinformationen die Versatzinformationen des zweiten SSB angeben.

5. Verfahren nach Anspruch 4, wobei die Versatzinformationen des zweiten SSB erste Versatzinformationen einer globalen Synchronisationskanalnummer (GSCN) des zweiten SSB relativ zu einer GSCN des ersten SSB umfassen; und

die zweiten Angabeinformationen ein erstes Bit und ein zweites Bit umfassen, wobei die GSCN des zweiten SSB und die GSCN des ersten SSB die folgende Beziehung erfüllen:

$$N_{GSCN2}^{Referenz} = N_{GSCN1}^{Referenz} + N_{GSCN1}^{Versatz} + a \times n \times N'^{Versatz}_{GSCN},$$

wobei

$N_{GSCN2}^{Referenz}$ die GSCN des zweiten SSB ist, $N_{GSCN1}^{Referenz}$ die GSCN des ersten SSB darstellt, $N_{GSCN1}^{Versatz}$ einen ersten Versatz darstellt, a ein durch das erste Bit angegebener Wert ist, ein Wert von a 1 oder -1 ist, n ein Anpassungs-koeffizient ist, und $N'^{Versatz}_{GSCN}$ ein Wert ist, der durch das zweite Bit angegeben wird.

6. Verfahren nach Anspruch 4, wobei die Versatzinformationen des zweiten SSB zweite Versatzinformationen einer GSCN des zweiten SSB relativ zu einer GSCN des ersten SSB umfassen; und

die zweiten Angabeinformationen ein erstes Bit und ein zweites Bit umfassen, wobei die GSCN des zweiten SSB und die GSCN des ersten SSB die folgende Beziehung erfüllen:

$$N_{GSCN2}^{Referenz} = N_{GSCN1}^{Referenz} + a \times n \times N''^{Versatz}_{GSCN},$$

wobei

$N_{GSCN2}^{Referenz}$ die GSCN des zweiten SSB ist, $N_{GSCN1}^{Referenz}$ die GSCN des ersten SSB darstellt, a ein durch das erste Bit angegebener Wert ist, ein Wert von a 1 oder -1 ist, n ein Anpassungskoeffizient ist, und $N''^{Versatz}_{GSCN}$ ein Wert ist, der durch das zweite Bit angegeben wird.

7. Verfahren nach Anspruch 4, wobei die Versatzinformationen des zweiten SSB den GSCN-Versatz des zweiten SSB umfassen; und

die zweiten Angabeinformationen ein erstes Bit und ein zweites Bit umfassen, wobei der Frequenzbereich des zweiten SSB $[N_{GSCN}^{Referenz} - N_{GSCN}^{Start} - b \times n \times N'''^{Versatz}_{GSCN}, N_{GSCN}^{Referenz} + N_{GSCN}^{Ende} + b \times n \times N'''^{Versatz}_{GSCN}]$ ist, wobei

$N_{GSCN}^{Referenz}$ eine GSCN des ersten SSB ist, $N_{GSCN}^{Start}$ ein GSCN-Startwert ist, b ein Wert ist, der durch das erste Bit angegeben wird, ein Wert von b 1 oder -1 ist, n ein Anpassungskoeffizient ist, $N_{GSCN}^{Ende}$ ein GSCN-Endwert ist, und $N'''^{Versatz}_{GSCN}$ ein Wert ist, der durch das zweite Bit angegeben wird.

8. Verfahren nach einem der Ansprüche 4 bis 7, wobei die zweiten Angabeinformationen durch mindestens eines von dem gemeinsamen Unterträgerabstandsfeld, dem Positionsfeld für ein Demodulations-Referenzsignal vom Typ A, dem Intra-Frequenz-Reselektionsfeld, dem Reservefeld und dem reservierten Feld, das einem Frequenzbereich (FR) in dem ersten SSB entspricht, übertragen werden.

9. Verfahren zur Übertragung eines Synchronisationssignalblocks, das durch eine Netzwerkvorrichtung durchgeführt wird und Folgendes umfasst:

Senden (101) eines ersten Synchronisationssignalblocks (SSB) an ein zweites Endgerät, wobei für Endgeräte unterschiedlichen Typs SSBs unterschiedlichen Typs durch die Netzwerkvorrichtung konfiguriert werden, wobei der erste SSB ein SSB vom ersten Typ für ein erstes Endgerät ist und der erste SSB ein SSB vom zweiten Typ für das zweite Endgerät ist, und wobei der SSB vom ersten Typ ein nicht zellendefinierender SSB (Nicht-CD-SSB) ist und der SSB vom zweiten Typ ein zellendefinierender SSB (CD-SSB) ist; und wenn der erste SSB der SSB vom ersten Typ für das erste Endgerät ist und der erste SSB der SSB vom zweiten Typ für das zweite Endgerät ist, gibt der erste SSB dem zweiten Endgerät einen ersten Satz von Steuerressourcen und/oder einen ersten gemeinsamen Suchraum auf der Grundlage des ersten SSB an,
wobei der erste SSB erste Angabeinformationen umfasst und ein erster Wert der ersten Angabeinformationen angibt, dass der erste SSB der SSB vom zweiten Typ für das zweite Endgerät ist, und

wobei die ersten Angabeinformationen durch mindestens eines von einem gemeinsamen Unterträgerabstandsfeld, einem Positionsfeld für ein Demodulations-Referenzsignal vom Typ A, einem Intra-Frequenz-Reselektionsfeld, einem Reservefeld und einem reservierten Feld, das einem Frequenzbereich (FR) in dem ersten SSB entspricht, übertragen werden.

10. Kommunikationsvorrichtung, die einen Prozessor und einen Speicher umfasst, wobei der Speicher mit dem Prozessor gekoppelt ist und der Prozessor konfiguriert ist, um das Verfahren nach einem der Ansprüche 1 bis 8 durchzuführen oder das Verfahren nach Anspruch 9 durchzuführen.

11. Computerlesbares Speichermedium, wobei das computerlesbare Speichermedium Anweisungen speichert; und wenn die Anweisungen auf einem Computer ausgeführt werden, der Computer in die Lage versetzt wird, das Verfahren nach einem der Ansprüche 1 bis 9 durchzuführen.

12. Computerprogrammprodukt, das Anweisungen umfasst, wobei, wenn die Anweisungen auf einem Computer ausgeführt werden, der Computer in die Lage versetzt wird, das Verfahren nach einem der Ansprüche 1 bis 9 durchzuführen.

**Revendications**

1. Procédé de transmission de bloc de signal de synchronisation réalisé par un second dispositif terminal, comprenant :

la réception (102) d'un premier bloc de signal de synchronisation, SSB, à partir d'un dispositif de réseau, dans lequel des SSB de différents types sont configurés par le dispositif de réseau pour des dispositifs terminaux de différents types, dans lequel le premier SSB est un SSB de premier type pour un premier dispositif terminal et le premier SSB est un SSB de second type pour le second dispositif terminal, et dans lequel le SSB de premier type est un SSB ne définissant pas de cellule, non-CD-SSB, et le SSB de second type est un SSB définissant une cellule, CD-SSB ; et

si le premier SSB est le SSB de premier type pour le premier dispositif terminal et le premier SSB est le SSB de second type pour le second dispositif terminal, la détermination (103) d'un premier ensemble de ressources de commande et/ou d'un premier espace de recherche commun sur la base du premier SSB,

dans lequel le premier SSB comprend de premières informations d'indication, et une première valeur des premières informations d'indication indique que le premier SSB est le SSB de second type pour le second dispositif terminal, et

dans lequel les premières informations d'indication sont transportées par au moins l'un parmi un champ d'espacement de sous-porteuse commun, un champ de position A de type signal de référence de démodulation, un champ de resélection intra-fréquence, un champ de réserve et un champ réservé correspondant à une gamme de fréquences, FR, dans le premier SSB.

2. Procédé selon la revendication 1, dans lequel la détermination d'un premier ensemble de ressources de commande et/ou d'un premier espace de recherche commun sur la base du premier SSB comprend :
la détermination du premier ensemble de ressources de commande et/ou du premier espace de recherche commun en utilisant au moins l'un parmi le champ d'espacement de sous-porteuse commun, le champ de position A de type de signal de référence de démodulation, le champ de resélection intra-fréquence, le champ de réserve et le champ réservé correspondant à la gamme de fréquences FR, 1 dans le premier SSB.

3. Procédé de transmission de bloc de signal de synchronisation réalisé par un second dispositif terminal, comprenant :

la réception d'un premier bloc de signal de synchronisation, SSB, à partir d'un dispositif de réseau, dans lequel des SSB d'un même type sont configurés par le dispositif de réseau pour des dispositifs terminaux de différents types,

dans lequel le premier SSB est un SSB de premier type pour un premier dispositif terminal et le second dispositif terminal, et dans lequel le SSB de premier type est un SSB ne définissant pas de cellule, non-CD-SSB ; et

si le premier SSB est le SSB de premier type pour le second dispositif terminal, la réception d'un second SSB à partir du dispositif de réseau, et la détermination d'un second ensemble de ressources de commande et/ou d'un second espace de recherche commun sur la base du second SSB, dans lequel le premier SSB comprend de premières informations d'indication, et une seconde valeur des premières informations d'indication indique que le premier SSB est le SSB de premier type pour le second dispositif terminal ; et
les premières informations d'indication sont transportées par au moins l'un parmi un champ d'espacement de sous-porteuse commun, un champ de position A de type signal de référence de démodulation, un champ de resélection intra-fréquence, un champ de réserve et un champ réservé correspondant à une gamme de fréquences, FR, dans le premier SSB.

4. Procédé selon la revendication 3, dans lequel le premier SSB comprend en outre de secondes informations d'indication ; dans lequel
les secondes informations d'indication indiquent des informations de décalage du second SSB.

5. Procédé selon la revendication 4, dans lequel les informations de décalage du second SSB comprennent des premières informations de décalage d'un numéro de canal de synchronisation global, GSCN, du second SSB par rapport à un GSCN du premier SSB ; et

les secondes informations d'indication comprennent un premier bit et un second bit, dans lequel
le GSCN du second SSB et le GSCN du premier SSB satisfont à la relation suivante :

$$N_{GSCN2}^{Référence} = N_{GSCN1}^{Référence} + N_{GSCN1}^{Décalage} + a \times n \times N'^{Décalage}_{GSCN},$$

où

$N_{GSCN2}^{Référence}$ est le GSCN du second SSB, $N_{GSCN1}^{Référence}$ représente le GSCN du premier SSB, $N_{GSCN1}^{Décalage}$ représente un premier décalage, a est une valeur indiquée par le premier bit, une valeur de a est 1 ou -1, n est un coefficient d'ajustement, et $N'^{Décalage}_{GSCN}$ est une valeur indiquée par le second bit.

6. Procédé selon la revendication 4, dans lequel les informations de décalage du second SSB comprennent des secondes informations de décalage d'un GSCN du second SSB par rapport à un GSCN du premier SSB ; et

les secondes informations d'indication comprennent un premier bit et un second bit, dans lequel
le GSCN du second SSB et le GSCN du premier SSB satisfont à la relation suivante :

$$N_{GSCN2}^{Référence} = N_{GSCN1}^{Référence} + a \times n \times N''^{Décalage}_{GSCN}$$

où

$N_{GSCN2}^{Référence}$ est le GSCN du second SSB, $N_{GSCN1}^{Référence}$ représente le GSCN du premier SSB, a est une valeur indiquée par le premier bit, une valeur de a est 1 ou -1, n est un coefficient d'ajustement, et $N''^{Décalage}_{GSCN}$ est une valeur indiquée par le second bit.

7. Procédé selon la revendication 4, dans lequel les informations de décalage du second SSB comprennent un décalage GSCN du second SSB ; et

les secondes informations d'indication comprennent un premier bit et un second bit, dans lequel
une gamme de fréquences du second SSB est

$$[N_{GSCN}^{Référence} - N_{GSCN}^{Début} - b \times n \times N'''^{Décalage}_{GSCN}, N_{GSCN}^{Référence} + N_{GSCN}^{Fin} + b \times n \times N'''^{Décalage}_{GSCN}],$$

où

$N_{GSCN}^{Référence}$ est un GSCN du premier SSB, $N_{GSCN}^{Début}$ est une valeur de départ de GSCN, b est une valeur indiquée par le premier bit, une valeur de b est 1 ou -1, n est un coefficient d'ajustement, $N_{GSCN}^{Fin}$ est une valeur de fin du GSCN, et $N'''^{Décalage}_{GSCN}$ est une valeur indiquée par le second bit.

8. Procédé selon l'une quelconque des revendications 4 à 7, dans lequel les secondes informations d'indication sont transportées par au moins l'un parmi le champ d'espacement de sous-porteuse commun, le champ de position A de type de signal de référence de démodulation, le champ de resélection intra-fréquence, le champ de réserve et le champ réservé correspondant à la gamme de fréquences FR dans le premier SSB.

9. Procédé de transmission de bloc de signal de synchronisation réalisé par un dispositif de réseau, comprenant :

l'envoi (101) d'un premier bloc de signal de synchronisation, SSB, à un second dispositif terminal, dans lequel des SSB de différents types sont configurés par le dispositif de réseau pour des dispositifs terminaux de différents types, dans lequel le premier SSB est un SSB de premier type pour un premier dispositif terminal et le premier SSB est un SSB de second type pour le second dispositif terminal, et dans lequel le SSB de premier type est un SSB ne définissant pas de cellule, non-CD-SSB, et le SSB de second type est un SSB définissant une cellule, CD-SSB ; et
si le premier SSB est le SSB de premier type pour le premier dispositif terminal et le premier SSB est le SSB de second type pour le second dispositif terminal, le premier SSB indique un premier ensemble de ressources de commande et/ou un premier espace de recherche commun au second dispositif terminal,
dans lequel le premier SSB comprend de premières informations d'indication, et une première valeur des premières informations d'indication indique que le premier SSB est le SSB de second type pour le second dispositif terminal, et
dans lequel les premières informations d'indication sont transportées par au moins l'un parmi un champ d'espacement de sous-porteuse commun, un champ de position A de type signal de référence de démodulation, un champ de resélection intra-fréquence, un champ de réserve et un champ réservé correspondant à une gamme de fréquences, FR, dans le premier SSB.

10. Appareil de communication, comprenant un processeur et une mémoire, dans lequel la mémoire est couplée au processeur, et le processeur est configuré pour réaliser le procédé selon l'une quelconque des revendications 1 à 8, ou pour réaliser le procédé selon la revendication 9.

11. Support de stockage lisible par ordinateur, dans lequel le support de stockage lisible par ordinateur stocke des instructions ; et lorsque les instructions sont exécutées sur un ordinateur, l'ordinateur est activé pour réaliser le procédé selon l'une quelconque des revendications 1 à 9.

12. Produit-programme informatique, comprenant des instructions, dans lequel, lorsque les instructions sont exécutées sur un ordinateur, l'ordinateur est activé pour réaliser le procédé selon l'une quelconque des revendications 1 à 9.

Network device

Second terminal device

101: Broadcast a first SSB

102: Receive the first SSB from the network device, where the first SSB is a first-type SSB for a first terminal device

103: If the first SSB is a second-type SSB for the second terminal device, determine a first control-resource set and/ or first common search space based on the first SSB

FIG. 1

First SSB

First indication information

Second indication information

Third indication information

FIG. 2

REDCAP terminal device

Step S1

Is an SSB a non-CD-SSB for a legacy terminal device?

Yes

Step S2

Is the SSB a non-CD-SSB for a REDCAP terminal device?

No

Yes

Step S3-1

Jump to a CD-SSB the same as that for the legacy terminal device

Step S3-2

A network device indicates a CD-SSB different from that for the legacy terminal device, and the REDCAP terminal device jumps to the CD-SSB different from that for the legacy terminal device

Step S4

A network device indicates a CORESET #0 and/or CSS to the REDCAP terminal device, and the REDCAP terminal device obtains an SIB 1

FIG. 3

Multiplexing pattern 1 of
an SSB and a CORESET

**FIG. 4**

**FIG. 5**

600

**Terminal device**

601

**Transceiver module**

602

**Processing module**

**FIG. 6**

700

**Network device**

701

**Transceiver module**

702

**Processing module**

**FIG. 7**

800

810

Transceiver

820

Processor

840

830

Memory

FIG. 8

900

910

Transceiver

920

Processor

940

930

Memory

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018220360 A1
- EP 3480978 A1
- FR 124
- FR 212

**Non-patent literature cited in the description**

- **QUALCOMM INCORPORATED**. Considerations for Standardization Framework and Design Principles of RedCap Devices. *R1-2004496*